# EUROPÄISCHE PATENTSCHRIFT

(11) **EP 2 803 895 B1**
(45) Veröffentlichungstag und Bekanntmachung des Hinweises auf die Patenterteilung: **25.01.2017**
(21) Anmeldenummer: 14161649.0
(22) Anmeldetag: 26.03.2014
(51) Int. Cl.: F16M 11/04, F16M 11/18, F16M 11/20, F16M 11/42, G02B 21/00

(54) **Schwenkarmstativ für Digitalmikroskope**
Pivot arm stand for digital microscopes
Support de bras pivotant pour microscope numérique

(30) Priorität: 09.04.2013 DE 102013005999
(43) Veröffentlichungstag der Anmeldung: 19.11.2014
(73) Patentinhaber: Carl Zeiss Microscopy GmbH, 07745 Jena (DE)
(72) Erfinder: Hein, Detlef, 37085 Göttingen (DE); Heise, Heino, 37139 Adelebsen (DE)
(74) Vertreter: Müller, Silke

(56) Entgegenhaltungen:
- EP-A1- 0 031 595
- WO-A1-97/13997
- DE-A1-102010 027 248
- JP-A- H06 148 528
- JP-A- 2001 025 472
- JP-A- 2010 102 344
- US-A- 4 621 782
- US-A1- 2004 138 524
- US-A1- 2004 246 469

## Beschreibung

Die Erfindung betrifft ein Schwenkarmstativ für Digitalmikroskope mit einem um eine Drehachse schwenkbaren Schwenkarm.

In der JP-2001059599-A2 und der JP-2010102344-A2 von Keyence wird ein Schwenkarmstativ für Digitalmikroskope beschrieben, das einen um eine horizontale Drehachse schwenkbaren Schwenkarm enthält. Ein Digitalmikroskop ist dadurch gekennzeichnet, dass der in der normalen Mikroskopie übliche visuelle Einblick über Okulare fehlt. Die Bildaufnahme erfolgt über einen Kamerachip bzw. eine Kamera, die Bildinformationen können direkt digital weiterverarbeitet werden. Der Schwenkarm enthält eine obere Fokussiereinheit, die sich zur Voreinstellung entlang einer Säule grob in der Höhe verschieben und über ein Handrad klemmen lässt. Parallel zur oben genannten einfachen Säulenführung lässt sich ein Träger für eine Zoomkörper-Objektiv-Kombination zur Fokussierung feiner positionieren. Die vorgenannten Angaben beziehen sich auf die Senkrechteinstellung des Schwenkarms, das heißt bei um die Drehachse geschwenktem Schwenkarm finden die Fokussierbewegungen unter dem entsprechenden Schwenkwinkel statt.

Die Fixierung des Schwenkarms erfolgt über ein am Stativunterteil angeordnetes Handrad, mit dem sich die drehbar gelagerte Achse des schwenkbaren Schwenkarms festklemmen lässt. Zur Sicherstellung der Senkrechteinstellung des Schwenkarms ist ein Rastbolzen in eine ortsfeste Bohrung im Stativunterteil zu stecken, die in der Senkrechtstellung des Schwenkarms mit einer weiteren Bohrung in der drehbaren Achse fluchtet, so dass der Rastbolzen in der Senkrechtstellung des Schwenkarms ganz hineingeschoben werden kann und so eine formschlüssige Verbindung zwischen dem Stativunterteil und der Drehachse des Schwenkarms liefert. In dieser Stellung ist der Schwenkarm über die oben genannte Klemmung dann wieder zu fixieren. Bei vollständig eingeschobenem Rastbolzen ist ein Schwenken des Schwenkarms auch bei gelöster Klemmung nicht möglich.

Zur Bedienung des Schwenkarms der beschriebenen Lösung gehört immer das Lösen der Klemmverbindung über das Handrad zum Verlassen der aktuellen Schwenkarmposition, die Einstellung des gewünschten Schwenkwinkels und das Fixieren des Schwenkarms über die Klemmung mittels Handrad in der gewünschten Schwenkarmposition.

Beginnend bei der mit Abstand am häufigsten benutzten Senkrechteinstellung des Schwenkarms muss zusätzlich der Rastbolzen herausgezogen und gegebenenfalls abgelegt werden. Das Handrad ist zu lösen, wobei es keine Sicherung gegen ein plötzliches Umkippen des Schwenkarms durch das wirksame Drehmoment, das durch die Masse und die Schwerpunktlage der Schwenkarmanordnung entsteht, gibt. Deshalb muss der Schwenkarm mit der anderen Hand abgestützt werden. Wenn der gewünschte Schwenkwinkel eingestellt ist, soll diese Einstellung schnell gesichert werden. Mit dem Handrad dauert das aber relativ lang. Mit der einen Hand muss das Handrad bedient und mit der anderen Hand der Schwenkarm in der Position gehalten werden, was eine schnelle und genaue Einstellung nahezu unmöglich macht. Wenn wieder in die am häufigsten genutzte Senkrechteinstellung des Schwenkarms zurück geschwenkt werden soll, ist der Vorgang in umgekehrter Reihenfolge zu wiederholen. Hierbei ist es sehr nachteilig, dass der Rastbolzen wieder in die Hand genommen werden muss, um ihn durch die miteinander in Flucht auszurichtenden Bohrungen schieben zu können. Außerdem gibt es zwischen dem Rastbolzen und den beiden Bohrungen ein deutlich spürbares größeres Passungsspiel. Praktisch führt das zu einer schlechten Reproduzierbarkeit der Senkrechteinstellung des Schwenkarms, denn innerhalb des Passungsspiels ergibt sich ein relativ großer Schwenkwinkelbereich, der ggf. dazu führen kann, dass das Bild trotz des vollständig eingeschobenen Rastbolzens in der Senkrechteinstellung an den seitlichen Rändern unscharf erscheint. Die umständliche Bedienung führt zu erhöhtem Zeitbedarf, wodurch weitere Kosten verursacht werden. Das Objekt lässt sich während des Schwenkvorgangs bis zur endgültigen Klemmung nicht manipulieren, da der Benutzer beide Hände für den Schwenkvorgang benötigt. Dadurch lassen sich Manipulationen am Objekt nur vor oder nach dem Schwenkvorgang durchführen, was gegebenenfalls weitere Schwenkvorgänge erforderlich macht, da der vorher eingestellte Schwenkwinkel für die weitere Bearbeitung ungeeignet ist.

Ausgehend von diesen Nachteilen liegt der Erfindung die Aufgabe zugrunde, ein Schwenkarmstativ für Digitalmikroskope mit einem schwenkbaren Schwenkarm dahingehend weiter zu bilden, dass die Schwenkbewegung inclusive das Lösen und Fixieren der Anordnung auf relativ einfache Art und Weise ausführbar ist, wobei dies auch das schnelle reproduzierbare Auffinden und Verlassen der Senkrechteinstellung des Schwenkarms umfasst und sich der jeweils gewünschte Schwenkwinkel hinreichend genau einstellen lässt. Ferner sollte das wirksame Drehmoment, das durch die Masse und die Schwerpunktlage der Schwenkarmanordnung entsteht, durch geeignete Maßnahmen kompensiert werden können, wobei die gesamte Anordnung aufgrund der preiskritischen Situation in der Digitalmikroskopie möglichst kostengünstig realisierbar sein muss.

Diese Aufgabe wird durch ein Schwenkarmstativ der eingangs beschriebenen Art durch die Merkmale des Patentanspruchs 1 gelöst. Vorteilhafte Ausgestaltungen sind in den Unteransprüchen 2 bis 16 angegeben.

Erfindungsgemäß ist die Schwenkarmbewegung durch eine um eine Drehachse angeordnete High Torque-Magnetbremse, die aus einem mitgeschwenkten Teil und einem feststehenden Teil besteht, blockierbar. Ferner kann die Blockierung für die Dauer eines Tastendrucks eines Tasters durch das Lösen der High Torque-Magnetbremse aufgehoben werden, wobei der Taster so am Schwenkarm SA angeordnet ist, dass er sich mit mindestens einem Finger derselben Hand, die einen ergonomisch geformten Bereich eines Schwenkarms, der zum Anfassen des Schwenkarms für die Einstellung eines Schwenkwinkel vorgesehen ist, umfasst, bequem drücken lässt.

Vorteilhafterweise befindet sich der mitgeschwenkte Teil der Magnetbremse auf einem Achsbolzen, ist dort über einen hinteren Vorschraubring und ein hinteres Wälzlager mit dem Achsbolzen fest verschraubt und in dieser Position mit einem Gewindestift auf einen Achsbolzen fixiert, wobei auf dem Achsbolzen auch ein vorderes Wälzlager angeordnet ist, das wie auch ein hinteres Wälzlager in einem Lagerbock gelagert ist, wobei der feststehende Teil der Magnetbremse mit dem Lagerbock verschraubbar ist und eine Anlage für das hintere Wälzlager bildet, die dazu genutzt wird, um das hintere Wälzlager gegen das vordere Wälzlager, das sich im Lagerbock abstützt, über einen vorderen Vorschraubring zu verspannen, wobei zwischen dem feststehenden Teil der Magnetbremse und dem mitgeschwenkten Teil der Magnetbremse ein für den Betrieb der Magnetbremse geeigneter Arbeitsspalt vorhanden ist.

Der Achsbolzen ist dabei über ein vorderes Ringspannfederpaket, das über mehrere Senkschrauben und eine vordere Druckscheibe gegen das Gelenkteil verspannt werden kann sowie über ein hinteres Ringspannfederpaket, das über mehrere Senkschrauben und eine hintere Druckscheibe gegen das Gelenkteil verspannt werden kann, mit dem Gelenkteil so fest verbunden, dass eine Schwenkbewegung um die aus der beschriebenen Lagerung resultierende Drehachse nur bei der mit Strom versorgten High Torque-Magnetbremse möglich ist.

Eine gewaltfreie Verstellung über den Schwenkarm ist dabei vorauszusetzen. Die Schwenkbewegung ist durch eine Anschlagschraube, die fest mit dem Gelenkteil verbunden ist und eine Anschlagnut, die sich im Lagerbock befindet, begrenzbar.

Vorteilhafterweise sind der ergonomisch geformte Bereich und der Taster am oberen Ende des Schwenkarms in einem hinreichend großen Abstand von der Drehachse entfernt angeordnet, so dass sich der Schwenkarm mit vertretbarem Kraftaufwand zur Einstellung des Schwenkwinkels bewegen lässt.

In einer vorteilhaften Ausgestaltung sind die Anordnung des Tasters und der ergonomisch geformte Bereich so ausgebildet, dass eine links- und eine rechtshändige Bedienung gleichermaßen möglich ist.

Zweckmäßigerweise ist die ergonomisch gekrümmte Oberseite des Schwenkarms so geformt, dass sie sowohl mit der nach rechts weisenden linken Hand, als auch mit der nach links weisenden rechten Hand bequem umfassbar ist, wobei sich der Taster dabei mit dem linken Daumen oder dem rechten Daumen der jeweils benutzten Hand von vorn bequem erreichen lässt.

In einer weiteren erfindungsgemäßen Ausgestaltungsvariante weist das Gelenkteil bezogen auf die Drehachse einen wirksamen Hebelarm auf, an dem die durch eine erste Zugfeder und eine zweite Zugfeder, die mit dem anderen Ende jeweils am Stativ angebracht sind, entstehenden Zugkräfte in das Gelenkteil über die Anordnung der Zugfedern am Stativ so einkoppelbar sind, dass sich das vom Benutzer zur Einstellung des Schwenkwinkels aufzubringende Drehmoment, das durch die vom aktuellen Schwenkwinkel sowie der aktuellen Z-Position der motorisierten oberen Z-Führung abhängige Position des Schwerpunktes und der dort angreifenden Gewichtskraft der mitgeschwenkten Teile und die durch die Lagerung entstehenden Reibmomente bestimmt wird, durch die Zugfedern im gesamten Schwenkwinkelbereich unabhängig von der aktuellen Z-Position der oberen motorisierten Z-Führung deutlich reduzierbar ist, so dass dem Benutzer die Bedienung erleichtert wird, wobei die im Bereich der Senkrechtstellung des Schwenkarms vorhandenen Drehmomente, die durch die erste Zugfeder und die zweite Zugfeder entstehen und die Bewegung in Richtung der Senkrechteinstellung unterstützen, zu einem schnelleren und einfacheren Auffinden der Senkrechteinstellung des Schwenkarms beitragen.

Dabei ist es von Vorteil, wenn die durch die erste Zugfeder und die zweite Zugfeder entstehenden Zugkräfte in das Gelenkteil über die Anordnung der Zugfedern am Stativ so einkoppelbar sind, dass sich das vom Benutzer zur Einstellung des Schwenkwinkels aufzubringende Drehmoment, das durch die vom aktuellen Schwenkwinkel sowie der aktuellen Z-Position der motorisierten oberen Z-Führung abhängige Position des Schwerpunktes und der dort angreifenden Gewichtskraft der mitgeschwenkten Teile und die durch die Lagerung entstehenden Reibmomente bestimmt wird, durch die Zugfedern im gesamten Schwenkwinkelbereich zwischen einer untersten Z-Position der oberen motorisierten Z-Führung und mindestens bis zu einer Grenz-Z-Position, in der eine Kippgefahr über die Kante bei unterschrittenem negativen Grenz-Schwenkwinkel oder über die Kante bei überschrittenem positivem Grenz-Schwenkwinkel besteht, vollständig ausgleichen oder überkompensieren lässt, wobei die Überkompensation zu stärkeren Rückstelldrehmomenten führt, die dem Benutzer eine Rückstellung des Schwenkarms) in die Senkrechtposition erleichtern.

Ferner ist es von Vorteil, wenn die Drehachse des Schwenkarms aus mindestens zwei reibungsarmen Wälzlagern bestimmt wird und eine hinreichend leichtgängige Rastanordnung mit einem spürbaren Rast-Einfangbereich zwischen dem Gelenkteil und dem ortsfesten Lagerbock angeordnet ist, wobei die wirkenden Rückstellkräfte, die aus der Rastanordnung mit den Anfederkräften und/oder aus der bereits beschriebenen Anordnung bei geringen Reibungsverlusten für die Lagerung und Rastanordnung resultieren, zum schnellen und sicheren Auffinden einer spür- und reproduzierbaren Rastposition für die senkrechte Ausrichtung des Schwenkarms führen.

Der starre Rasthebel ist um eine Drehachse im Gelenkteil drehbar gelagert und trägt ein Rastkugellager, das eine Drehachse aufweist. Das Rastsegment beinhaltet eine hinreichend verschleißfeste Mantelfläche, auf der das Rastkugellager abrollt und eine Rastgeometrie, in der das Rastkugellager einrasten kann. Zur Erzeugung der hierfür erforderlichen Rastkräfte wird der Rasthebel durch mindestens eine Zug- oder Druckfeder, beispielsweise durch die drei Druckfedern gegen die Mantelfläche, beziehungsweise in die Rastgeometrie des Rastsegments gedrückt, wobei die Rastgeometrie so aufgebaut ist, dass das Rastkugellager ab dem Beginn des Einfangbereichs, der bereits spürbar vor dem Erreichen der senkrechten Ausrichtung des Schwenkarms beginnt, in eine stabile Rastposition gezogen wird, die einer senkrechten Ausrichtung des Schwenkarms entspricht. Durch die stabile Rastposition ist auch eine gute Reproduzierbarkeit der senkrechten Ausrichtung des Schwenkarms gegeben.

Vorteilhafterweise ist der ergonomisch geformte Bereich des Schwenkarms mit einer Oberfläche versehen, die erkennbar zum Anfassen bestimmt ist, beispielsweise durch eine farblich abgesetzte Soft Touch-Oberfläche als Griffoberfläche am oberen Ende des Schwenkarms.

In einer weiteren vorteilhaften Ausgestaltung wird die aktuelle Z-Koordinate der motorisierten oberen Z-Führung bei gedrücktem Taster abgefragt und die Schwenkbewegung nur dann zugelassen, wenn die zulässige Grenz-Z-Position der motorisierten oberen Z-Führung sicher unterschritten ist.

Ferner ist es von Vorteil, wenn die aktuelle Z-Koordinate der motorisierten oberen Z-Führung bei gedrücktem Taster abfragbar ist, die Winkelstellung des Schwenkarms durch ein Messsystem bestimmbar ist und die Schwenkbewegung abhängig von der aktuellen Z-Koordinate der motorisierten oberen Z-Führung auf einen zulässigen Schwenkwinkelbereich begrenzt wird, wobei eine Blockierung der Magnetbremse im nicht zulässigen Schwenkwinkelbereich nicht zugelassen wird und im Zusammenspiel mit der bereits beschriebenen Zugfederanordnung eine hinreichend große Rückstellkraft für die Rückkehr in den zulässigen Schwenkwinkelbereich vorhanden ist, so dass das Loslassen des Tasters im nicht zulässigen Schwenkwinkelbereich zu einem eingestellten Schwenkwinkel im zulässigen Schwenkwinkelbereich führt.

Dabei sollte das Verlassen des zulässigen Schwenkwinkelbereichs durch ein akustisches Signal und/oder einen Warnhinweis auf der Bedien- und Anzeigeeinheit angezeigt werden.

Ferner ist es von Vorteil, dass die Mantelfläche außerhalb der Rastgeometrie so gekrümmt ist, dass das Rastkugellager stets denselben Abstand zur Drehachse aufweist, wodurch die Andruckkraft des Rastkugellagers an die Mantelfläche des Rastsegmentes unabhängig vom Schwenkwinkel stets konstant bleibt.

Ferner kann der Abstand zwischen dem Rastkugellager und der Drehachse abhängig vom Schwenkwinkel veränderbar sein, wodurch die Andruckkraft des Rastkugellagers an die Mantelfläche des Rastsegmentes ebenfalls abhängig vom Schwenkwinkel ist, wobei die Krümmung so wählbar ist, dass die Drehmomentverläufe aus der beschriebenen Zugfederanordnung so korrigiert werden kann, dass sich insgesamt der gewünschte Drehmomentverlauf in Abhängigkeit vom Schwenkwinkel ergibt.

Ebenfalls ist es von Vorteil, dass der Schwenkarm am oberen Ende um die in der Senkrechteinstellung senkrechte Mittelachse rotationssymmetrisch ausgebildet ist, so dass dadurch ein ergonomisch geformter Bereich entsteht, der sich sowohl mit der nach rechts weisenden linken Hand, als auch mit der nach links weisenden rechten Hand bequem umfassbar ist, wobei sich der an der oberen Stirnfläche des Schwenkarms angeordnete Taster dabei mit dem linken Daumen oder rechten Daumen der jeweils benutzten Hand von oben bequem erreichen lässt.

Die erfindungsgemäße Lösung ermöglicht das schnelle Lösen und Feststellen des Schwenkarms über eine kurzen Tastendruck, wobei der Taster an einer geeigneten Stelle positioniert ist, die während der Einstellung des Schwenkarms mit derselben Hand erreicht werden kann.

Bisher war es Stand der Technik, die Einstellung des Schwenkarms mit zwei Händen vornehmen zu müssen, wobei das Lösen und Klemmen der Klemmung relativ zeitaufwändig war.

Außerdem gibt es gegenüber dem Stand der Technik eine kostengünstige und wirksame Entlastung der Anordnung durch Zugfedern, was praktisch zu einer schnelleren und bei höherem Qualitätseindruck genaueren Einstellung des Schwenkwinkels, sowie aufgrund eines leicht realisierbaren Rückstelldrehmomentes auch zu einer einfacheren Rückstellung des Schwenkarms in die Senkrechtstellung führt.

Die vollständig integrierte Rastanordnung für die Senkrechtstellung des Schwenkarmes liefert eine exakte Rastposition, sie lässt leicht erkennen und bietet eine gute Rastproduzierbarkeit. In beiden Rastrichtungen werden nahezu identische Rastkräfte erzeugt, wobei keine zusätzlichen Handgriffe erforderlich sind. Zur Realisierung einer guten Rastreproduzierbarkeit ist eine entsprechende Genauigkeit der Rastanordnung und aller Lagerungen vorauszusetzen.

Besonders vorteilhaft ist die entlastende einfache Zugfederanordnung aus der ersten Zugfeder und der zweiten Zugfeder, die genauere Einstellungen ermöglicht und über das leicht realisierbare Rückstellmoment die Rückkehr in die Senkrechtstellung des Schwenkarms erleichtert.

Nützlich ist auch eine Codierung des Schwenkwinkels, da sich abhängig vom Schwenkwinkel verschiedene Aktionen durchführen lassen. Sie ist allerdings nicht zwingend erforderlich.

Die Mantelfläche außerhalb der Rastgeometrie lässt sich auch hinsichtlich der Krümmung so variieren, dass sich der Abstand zwischen dem Rastkugellager und der Drehachse abhängig vom Schwenkwinkel ändert, wodurch die Andruckkraft des Rastkugellagers an die Mantelfläche des Rastsegmentes ebenfalls abhängig vom Schwenkwinkel ist, wobei die Krümmung so gewählt werden kann, dass die Drehmomentverläufe aus der Zugfederanordnung so korrigiert werden, dass sich insgesamt der gewünschte Drehmomentverlauf in Abhängigkeit vom Schwenkwinkel ergibt.

Nützlich ist eine Motorisierung der oberen und der unteren Z-Führung, da sich abhängig von der Z-Position verschiedene Aktionen durchführen lassen.

Die Geometrie der Rastanordnung beziehungsweise der Rastgeometrie kann variiert werden, sofern sich dadurch die gewünschte Wirkungsweise der Rastanordnung beziehungsweise der Rastgeometrie nicht nennenswert verändert. Wichtigste Kriterien sind ein hinreichend großer Rast-Einfangbereich mit möglichst großen Rückstellkräften beziehungsweise Rückstelldrehmomenten durch die Rastanordnung. Die Einstellung der Rastkräfte beziehungsweise der Rastdrehmomente über Gewindestifte und/oder mehrere Druck- und/oder Zugfedern kann beliebig variiert werden. Die Einstellung über Gewindestifte ist aber nicht unbedingt erforderlich.

Zusätzlich lässt sich die Zugfederanordnung so verändern, dass sich die Drehmomentverläufe entsprechend ändern, aber prinzipiell noch immer den vorteilhaften Kriterien zur Dimensionierung entsprechen.

Motorisierung, Codierung oder manuelle Bedienung der beiden Z-Führungen sind denkbar.

High Torque-Magnetbremsen sind gekennzeichnet durch ein größeres Haltemoment im stromlosen Zustand. Falls es Magnetbremsen mit ähnlich hohen Haltemomenten ohne diese Bezeichnung geben sollte wären diese auch geeignet für die erfindungsgemäße Anwendung.

Die Anbringung der motorisierten unteren Z-Führung kann entweder am Stativfuß oder am Lagerbock oder an beiden Bauteilen erfolgen.

Das erfindungsgemäße Schwenkarmstativ soll nachstehend anhand von Ausführungsbeispielen näher erläutert werden. Dazu zeigen:
- Figuren 1:: Darstellungen des Digitalmikroskopie-Systems mit dem Schwenkstativ,
- Figur 2:: ein Ausführungsbeispiel für die erfindungsgemäße Gestaltung der Lagerung, inclusive Magnetbremse und Rastanordnung,
- Figur 3:: ein Ausführungsbeispiel für die erfinderische Gestaltung der Rastanordnung,
- Figuren 4:: Darstellungen der Vorderansicht der Einhand-Bedienung der Schwenkfunktion,
- Figuren 5:: Darstellungen die Rückansicht des Schwenkstativs zur Verdeutlichung der Zugfederanordnungen,
- Figuren 6:: Darstellungen der Vorderansicht des Schwenkstativs in der Senkrechtstellung bei verschiedenen Z- Positionen der oberen Führung,
- Figuren 7:: Darstellungen der Vorderansicht des geschwenkten Schwenkstativs in verschiedenen z-Positionen der oberen Z-Führung,
- Figuren 8:: weitere Darstellungen der Vorderansicht des geschwenkten Schwenkstativs in verschiedenen z-Positionen der oberen Z-Führung,
- Figuren 9:: weitere Darstellungen der Vorderansicht des Schwenkstativs in verschiedenen z-Positionen der unteren Z-Führung,
- Figuren 10:: Darstellungen der Verläufe der Zugkräfte einer ersten sowie einer zweiten Zugfeder und
- Figur 11:: eine Darstellung von Drehmomentverläufen.

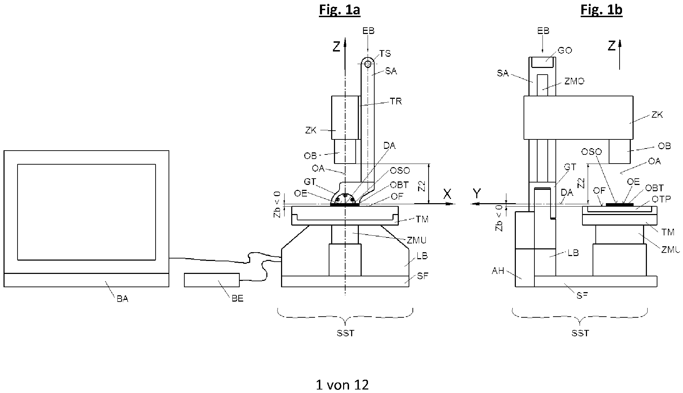

Die Figuren 1a und 1b zeigen ein Digitalmikroskopie-System mit einem erfindungsgemäßen Schwenkstativ SST. Die Figur 1a enthält eine Darstellung der vom Benutzer aus gesehenen Vorderansicht des Digitalmikroskopie-Systems incl. erfindungsgemäßem Schwenkstativ SST, einer Bedieneinheit BE, sowie einer Bedien- und Anzeigeeinheit BA, während die Figur 1b nur die Seitenansicht von links zum erfindungsgemäßen Schwenkstativ SST darstellt.

Zur Orientierung wird ein räumliches Koordinatensystem eingeführt, bestehend aus einer vom Benutzer aus gesehen positiv nach rechts weisenden X-Achse, einer vom Benutzer aus gesehen positiv nach hinten weisenden Y-Achse und einer vom Benutzer aus gesehen positiv nach oben weisenden Z-Achse. Der Ursprung des Koordinatensystems liegt im Schnittpunkt der Drehachse DA mit der optischen Achse OA.

Das Schwenkstativ SST enthält einen Stativfuß SF, auf dem ein Lagerbock LB montiert ist, in dem eine Lagerung für einen um eine Drehachse DA schwenkbaren Gelenkteil GT mit daran fest angeordnetem Schwenkarm SA integriert ist. Am Schwenkarm ist eine motorisierte obere Z-Führung ZMO angeordnet, über die ein Träger TR zur Adaption des Zoomkörpers ZK in der Z-Position relativ zur Drehachse DA des Schwenkarms SA variiert werden kann. In den Figuren 1a und 1b ist beispielhaft eine Z-Position Z2 für die über die motorisierte obere Z-Führung ZMO bewegbaren Teile dargestellt, wozu neben dem Träger TR und dem Zoomkörper ZK auch die im Zoomkörper ZK integrierten Beleuchtung und Kamera, sowie das Objektiv OB gehören. Am Stativfuß SF ist eine motorisierte untere Z-Führung ZMU angebracht, wobei die motorisierte untere Z-Führung ZMU auch alternativ am Lagerbock LB angebracht sein könnte. Die Rückseite des Schwenkstativs SST wird durch eine Abdeckhaube AH abgedeckt.

An der hinsichtlich der Z-Position relativ zur Drehachse DA des Schwenkarms SA variierbaren motorisierten unteren Z-Führung ZMU lässt sich ein vorzugsweise motorisierter XY-Tisch TM adaptieren, der eine obere Tischplatte OTP beinhaltet, in die eine Auflicht-Einlegeplatte, die als Objektauflage dient, integriert ist. Gemäß der Figuren 1a und 1b ist an der motorisierten unteren Z-Führung ZMU eine Z-Position Zb <0, in der die Oberseite OSO eines auf die Oberfläche OF der Auflicht-Einlegeplatte AE aufgelegten Objektes OBT in der Drehachse DA des Schwenkarms liegt, eingestellt. Die Figuren 1a und 1b zeigen das Schwenkstativ SST im fokussierten Zustand, d. h. die Oberseite OSO des auf die Oberfläche OF der Auflicht-Einlegeplatte AE aufgelegten Objektes OBT befindet sich in der Objektebene OE.

Der Schwenkarm SA enthält am oberen Ende einen ergonomisch geformten Bereich EB mit einer Griffoberfläche GO, die zum Anfassen des Schwenkarms SA während des Schwenkvorgangs vorgesehen ist. Durch eine farblich abgesetzte Soft Touch-Oberfläche lässt sich der anzufassende ergonomisch geformte Bereich EB bei angenehmer Haptik sichtbar kennzeichnen. Der ergonomisch geformte Bereich EB und der Taster TS am oberen Ende des Schwenkarms SA sind in einem hinreichend großen Abstand von der Drehachse DA entfernt angeordnet, so dass sich der Schwenkarm SA mit vertretbarem Kraftaufwand zur Einstellung des Schwenkwinkels bewegen lässt.

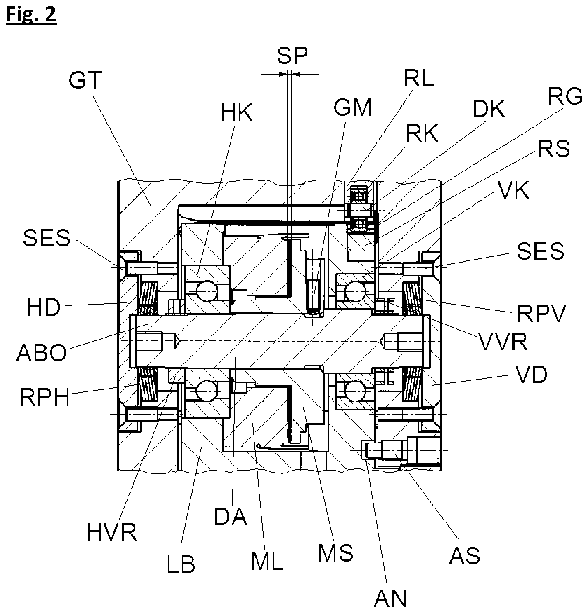

Figur 2 zeigt ein Ausführungsbeispiel für die erfindungsgemäße Gestaltung der Lagerung incl. Magnetbremse und Rastanordnung.

Die Schwenkarmbewegung wird durch eine um die Drehachse DA angeordnete High Torque-Magnetbremse, beispielsweise eine "High Torque-Permanentmagnetbremse 400mm Kabel rt/bl 86 61106P10-0 24V /Kendrion Binder Magnete
Ausführung: RoHS-konform", die gemäß Figur 2 aus einem mitgeschwenkten Teil MS und einem feststehenden Teil ML besteht, blockiert. Die Blockierung kann für die Dauer des Tastendrucks eines Tasters TS gemäß Figur 1 über das Lösen der High Torque-Magnetbremse aufgehoben werden, wobei der Taster TS so am Schwenkarm SA angeordnet ist, dass er sich mit mindestens einem Finger derselben Hand, die den ergonomisch geformten Bereich EB des Schwenkarms SA, der zum Anfassen des Schwenkarms SA für die Einstellung des Schwenkwinkels vorgesehen ist, umfasst, bequem drücken lässt.

Gemäß Figur 2 befindet sich der mitgeschwenkte Teil MS der Magnetbremse auf einem Achsbolzen ABO, wird dort über einen hinteren Vorschraubring HVR und ein hinteres Wälzlager HK mit dem Achsbolzen ABO fest verschraubt und in dieser Position mit einem Gewindestift GM auf dem Achsbolzen fixiert. Auf dem Achsbolzen ABO ist auch ein vorderes Wälzlager VK angeordnet, das -wie auch das hintere Wälzlager HK- in einem Lagerbock LB gelagert ist, wobei der feststehende Teil ML der Magnetbremse mit dem Lagerbock verschraubt wird und eine Anlage für das hintere Wälzlager HK bildet, die dazu genutzt wird, um das hintere Wälzlager HK gegen das vordere Wälzlager VK, das sich im Lagerbock LB abstützt, über einen vorderen Vorschraubring VVR zu verspannen. Als Wälzlager kommen vorzugsweise Schrägkugellager zum Einsatz, die höher belastbar, als normale Rillenkugellager sind und sich somit bei Bedarf stärker gegeneinander verspannen lassen. Zwischen dem feststehenden Teil ML der Magnetbremse und dem mitgeschwenkten Teil MS der Magnetbremse ist durch die gewählte Anordnung ein für den Betrieb der Magnetbremse geeigneter Arbeitsspalt SP vorhanden. Über mehrere Senkschrauben SES wird eine vordere Druckscheibe VD gegen ein vorderes Ringspannfederpaket RPV gedrückt, das hierdurch das Gelenkteil GT im vorderen Bereich mit dem Achsbolzen ABO verbindet. Analog hierzu wird eine hintere Druckscheibe HD über mehrere Senkschrauben SES gegen ein hinteres Ringspannfederpaket RPH gedrückt, das hierdurch das Gelenkteil GT im hinteren Bereich mit dem Achsbolzen ABO verbindet. Dadurch wird der Gelenkteil GT so fest mit dem Achsbolzen ABO verbunden, dass eine Schwenkbewegung um die aus der beschriebenen Lagerung resultierende Drehachse DA praktisch nur bei einer bestromten High Torque-Magnetbremse möglich ist, wobei eine gewaltfreie Verstellung über den Schwenkarm SA vorauszusetzen ist. Die Schwenkbewegung wird durch eine Anschlagschraube AS, die fest mit dem Gelenkteil GT verbunden ist und in eine Anschlagnut AN eingreift, die sich im Lagerbock LB befindet, begrenzt.

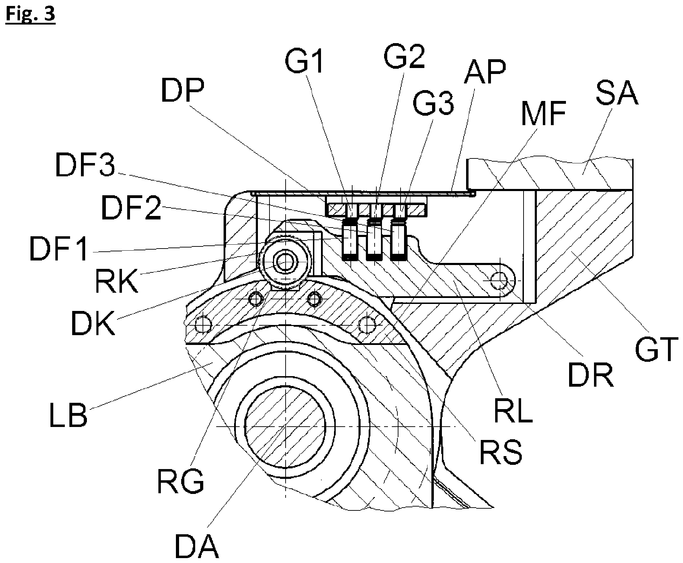

Figur 2 zeigt auch Teile der erfindungsgemäßen Rastanordnung, die in Figur 3 detaillierter beschrieben wird. Ein Rastkugellager RK mit einer Drehachse DK, das in einem starren Rasthebel RL angeordnet ist, greift in eine Rastgeometrie RG im Rastsegment RS ein, wobei das Rastsegment RS fest am Lagerbock LB montiert ist.

Figur 3 zeigt ein Ausführungsbeispiel für die erfinderische Gestaltung der Rastanordnung.

Der starre Rasthebel RL ist um eine Drehachse DR im Gelenkteil GT drehbar gelagert und trägt ein Rastkugellager RK, das eine Drehachse DK aufweist. Das Rastsegment RS beinhaltet eine hinreichend verschleißfeste Mantelfläche MF, auf der das Rastkugellager RK abrollt und eine Rastgeometrie RG, in der das Rastkugellager RK einrasten kann. Zur Erzeugung der hierfür erforderlichen Rastkräfte wird der Rasthebel RL durch mindestens eine Zug- oder Druckfeder, beispielsweise durch die drei Druckfedern DF1, DF2 und DF3, gegen die Mantelfläche MF bzw. in die Rastgeometrie des Rastsegments RS gedrückt, wobei die Rastgeometrie RG so aufgebaut ist, dass das Rastkugellager RK ab dem Beginn des Einfangbereichs, der bereits spürbar vor dem Erreichen der senkrechten Ausrichtung des Schwenkarms SA beginnt, in eine stabile Rastposition gezogen wird, die einer senkrechten Ausrichtung des Schwenkarms SA entspricht. Durch die stabile Rastposition ist auch eine gute Reproduzierbarkeit der senkrechten Ausrichtung des Schwenkarms SA gegeben.

Im Ausführungsbeispiel gemäß Figur 3 stützen sich die Druckfedern DF1, DF2 und DF3 gegen die Gewindestifte G1, G2, G3, die in einer mit dem Gelenkteil GT verbundenen Druckplatte DP angeordnet sind. Mit den Gewindestiften G1, G2, G3 lassen sich die Andruckkräfte bei Bedarf variieren. Über eine Abdeckplatte AP wird die Rastanordnung im Gelenkteil GT abgedeckt, so dass sie von außen nicht sichtbar ist.

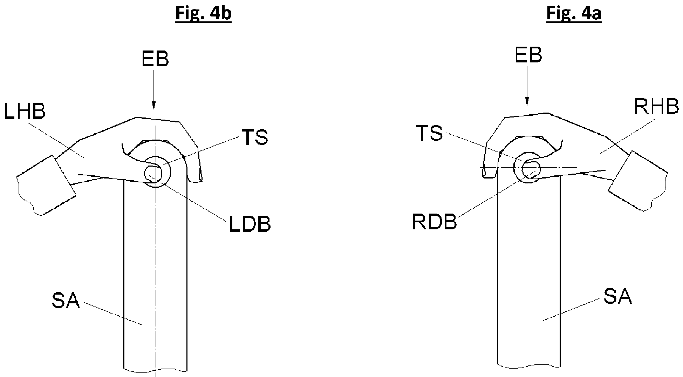

Die Figuren 4a und 4b zeigen in der Vorderansicht ein Ausführungsbeispiel für die erfindungsgemäße Einhand-Bedienung der Schwenkfunktion des Schwenkarms SA über einen Taster TS und einen ergonomisch geformten Bereich EB, die für Links- und Rechtshänder gleichermaßen geeignet ist. In Figur 4b ist die Bedienung über die linke Hand LHB des Benutzers dargestellt, während Figur 4a die Bedienung über die rechte Hand RHB des Benutzers darstellt. Die ergonomisch gekrümmte Oberseite des Schwenkarms SA ist dabei so geformt, dass sich der dadurch entstehende ergonomisch geformte Bereich EB sowohl mit der nach rechts weisenden linken Hand LHB, als auch mit der nach links weisenden rechten Hand RHB bequem umfassen lässt, wobei sich der Taster TS dabei mit dem Daumen LDB bzw. RDB der jeweils benutzten Hand von vorn bequem erreichen lässt.

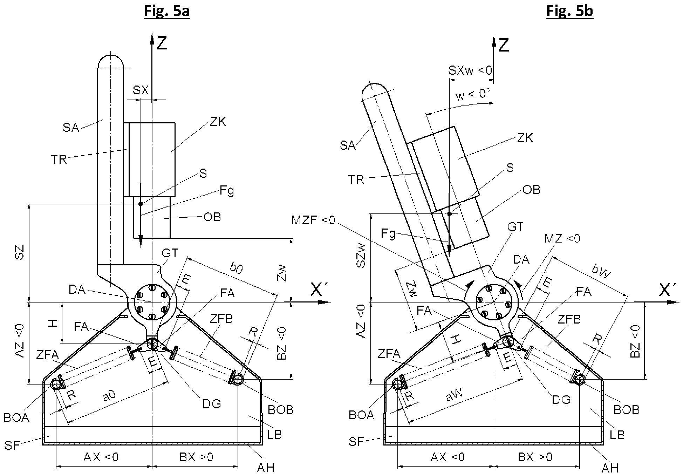

Zur Verdeutlichung der erfindungsgemäßen Funktion der ersten Zugfeder ZFA und der zweiten Zugfeder ZFB zeigt die Figur 5a das erfindungsgemäße Schwenkstativ SST in der Rückansicht in der Senkrechteinstellung des Schwenkarms SA und die Figur 5b das erfindungsgemäße Schwenkstativ SST in der Rückansicht mit einem gegenüber der senkrechten Ausrichtung um den aktuellen Schwenkwinkel w geneigten Schwenkarm SA, wobei jeweils der Schwerpunkt S des mitschwenkbarem Aufbaus, der auch das Gelenkteil GT, den Schwenkarm SA, den Träger TR, den Zoomkörper ZK mit integrierter Beleuchtung und Kamera, sowie das Objektiv OB umfasst, dargestellt ist.

Das Gelenkteil GT enthält bezogen auf die Drehachse DA einen wirksamen Hebelarm H, an dem die durch eine erste Zugfeder ZFA und eine zweite Zugfeder ZFB, die mit dem anderen Ende jeweils am Stativ angebracht sind, entstehenden Zugkräfte in das Gelenkteil GT über die Anordnung der Zugfedern am Stativ eingekoppelt werden. Das vom Benutzer zur Einstellung des Schwenkwinkels w aufzubringende Drehmoment, das durch die vom aktuellen Schwenkwinkel sowie der aktuellen Z-Position der motorisierten oberen Z-Führung ZMO abhängige Position des Schwerpunktes S und der dort angreifenden Gewichtskraft der mitgeschwenkten Teile und die durch die Lagerung entstehenden Reibmomente bestimmt wird, lässt sich durch die Zugfedern im gesamten Schwenkwinkelbereich unabhängig von der aktuellen Z-Position der oberen motorisierten Z-Führung ZMO deutlich reduzieren, so dass dem Benutzer die Bedienung erleichtert wird. Dabei tragen die im Bereich der Senkrechtstellung des Schwenkarms SA vorhandenen Drehmomente, die durch die erste Zugfeder ZFA und die zweite Zugfeder ZFB entstehen und die Bewegung in Richtung der Senkrechteinstellung unterstützen, zu einem schnelleren und einfacheren Auffinden der Senkrechteinstellung des Schwenkarms SA bei.

Die Bezeichnungen entsprechen sonst den Bezeichnungen aus den Figuren 1a und 1b.

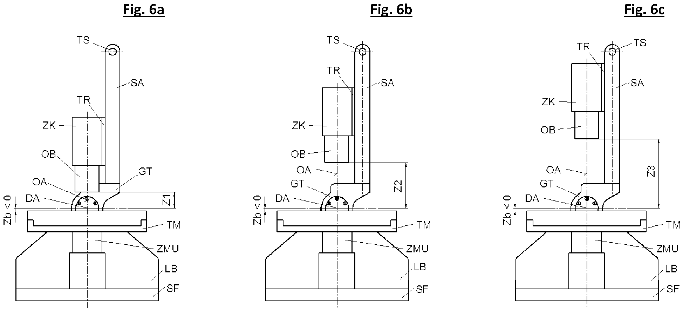

Zur Verdeutlichung der Einstellmöglichkeiten zeigen die Figuren 6a, 6b und 6c das erfindungsgemäße Schwenkstativ SST in der Vorderansicht jeweils in verschiedenen Z-Positionen Z1, Z2, Z3 der motorisierten oberen Z-Führung ZMO relativ zur Drehachse DA, wobei sich der Schwenkarm SA in der Senkrechteinstellung befindet und die Z-Position der motorisierten unteren Z-Führung ZMU relativ zur Drehachse DA einen Wert Zb <0 aufweist. Die Bezeichnungen entsprechen sonst den Bezeichnungen aus den Figuren 1a und 1b.

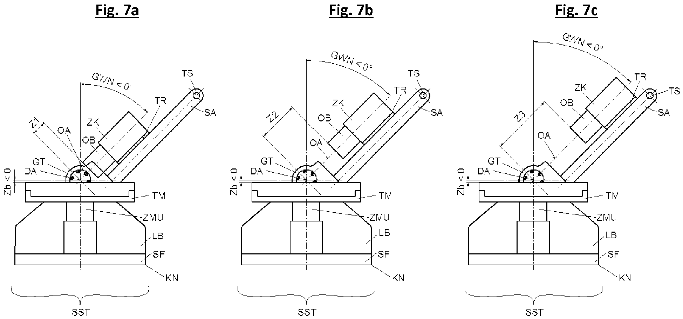

Zur Verdeutlichung der Einstellmöglichkeiten zeigen die Figuren 7a, 7b und 7c das erfindungsgemäße Schwenkstativ SST in der Vorderansicht jeweils in verschiedenen Z-Positionen Z1, Z2, Z3 der motorisierten oberen Z-Führung ZMO relativ zur Drehachse DA, wobei der Schwenkarm SA gegenüber der senkrechten Ausrichtung um den negativen Grenz-Schwenkwinkel GWN <0° nach rechts geneigt ist und die Z-Position der motorisierten unteren Z-Führung ZMU relativ zur Drehachse DA einen Wert Zb <0 aufweist. Der negative Grenz-Schwenkwinkel GWN <0° ist dadurch gekennzeichnet, dass bei einer betragsmäßigen Überschreitung dieses Winkels eine Kippgefahr um die Kante KN besteht, sofern eine Grenz-Z-Position Z2 der motorisierten oberen Z-Führung ZMO relativ zur Drehachse DA überschritten wird. Gemäß Figur 7b befindet sich das dort dargestellte Schwenkstativ SST an der Grenze zur Kippgefahr.

Gemäß Figur 7a befindet sich das dort dargestellte Schwenkstativ SST im sicheren Betriebsbereich. Gemäß Figur 7c befindet sich das dort dargestellte Schwenkstativ SST in einem unsicheren Zustand, der unbedingt vermieden werden muss. Beispielsweise kann das dadurch erfolgen, dass der Schwenkwinkelbereich und die maximal erreichbare Z-Position der motorisierten oberen Z-Führung ZMO relativ zur Drehachse DA konstruktiv so weit eingeengt werden, dass eine Kippgefahr bei sämtlichen Kombinationsmöglichkeiten aus Schwenkwinkel und Z-Position der oberen Z-Führung ZMO ausgeschlossen werden kann, dies bedeutet praktisch eine nachteilige Beschränkung des Nutzbereiches.

Mit der erfindungsgemäßen Anordnung lässt sich dieser Nachteil vermeiden, wenn die aktuelle Z-Koordinate der motorisierten oberen Z-Führung ZMO bei gedrücktem Taster TS durch eine entsprechende Steuerungselektronik mit Software, die beispielsweise in der Bedien- und Anzeigeeinheit BA gemäß Figur 1a enthalten ist, abgefragt und die Schwenkbewegung nur dann zugelassen wird, wenn die zulässige Grenz-Z-Position Z2 der motorisierten oberen Z-Führung ZMO sicher unterschritten ist. Eine weitere Möglichkeit auf Basis der erfindungsgemäßen Anordnung besteht darin, dass die aktuelle Z-Koordinate der motorisierten oberen Z-Führung ZMO bei gedrücktem Taster TS durch eine entsprechende Steuerungselektronik mit Software, die beispielsweise in der Bedien- und Anzeigeeinheit BA gemäß Figur 1a enthalten ist, abgefragt wird, die Winkelstellung des Schwenkarms SA durch ein Winkelmesssystem bestimmbar ist und die Schwenkbewegung abhängig von der aktuellen Z-Koordinate der motorisierten oberen Z-Führung ZMO auf einen zulässigen Schwenkwinkelbereich begrenzt wird, wobei eine Blockierung der Magnetbremse im nicht zulässigen Schwenkwinkelbereich nicht zugelassen wird und im Zusammenspiel mit der Zugfederanordnung gemäß der Figuren 5a und 5b eine hinreichend große Rückstellkraft für die Rückkehr in den zulässigen Schwenkwinkelbereich vorhanden ist, so dass das Loslassen des Tasters TS im nicht zulässigen Schwenkwinkelbereich zu einem eingestellten Schwenkwinkel im zulässigen Schwenkwinkelbereich führt.

Dabei ist es vorteilhaft, wenn das Verlassen des zulässigen Schwenkwinkelbereichs durch ein akustisches Signal und/oder einen Warnhinweis auf der Bedien- und Anzeigeeinheit angezeigt wird. Die Bezeichnungen entsprechen sonst den Bezeichnungen aus den Figuren 1a und 1b.

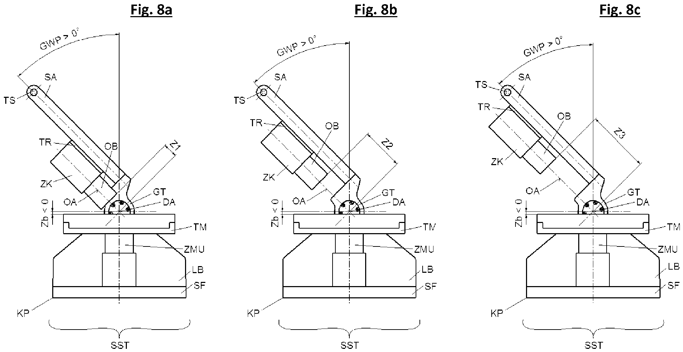

Zur Verdeutlichung der Einstellmöglichkeiten zeigen die Figuren 8a, 8b und 8c das erfindungsgemäße Schwenkstativ SST in der Vorderansicht jeweils in verschiedenen Z-Positionen Z1, Z2, Z3 der motorisierten oberen Z-Führung ZMO relativ zur Drehachse DA, wobei der Schwenkarm SA gegenüber der senkrechten Ausrichtung um den positiven Grenz-Schwenkwinkel GWP nach links geneigt ist und die Z-Position der motorisierten unteren Z-Führung ZMU relativ zur Drehachse DA einen Wert Zb <0 aufweist. Die vorstehenden Erläuterungen zu den Figuren 7a, 7b und 7c gelten sinngemäß auch für die Figuren 8a, 8b und 8c. Es ändert sich nur die Schwenkrichtung, der positive Grenz-Schwenkwinkel GWP bedeutet praktisch eine Schwenkbewegung nach links mit einer Kippgefahr über die Kante KP. Die Bezeichnungen entsprechen sonst den Bezeichnungen aus den Figuren 1a und 1b.

Die Zugfederanordnung gemäß der Anordnung in den Figuren 5a und 5b lässt sich prinzipiell so dimensionieren, dass sich das für die Schwenkbewegung ohne Zugfederanordnung erforderliche Drehmoment durch die Zugfedern im gesamten Schwenkwinkelbereich zwischen einer untersten Z-Position Z1 der oberen motorisierten Z-Führung ZMO und mindestens bis zu einer Grenz-Z-Position Z2, in der eine Kippgefahr über die Kante KN bei unterschrittenem negativen Grenz-Schwenkwinkel GWN oder über die Kante KP bei überschrittenem positivem Grenz-Schwenkwinkel GWP besteht, vollständig ausgleichen oder überkompensieren lässt, wobei die Überkompensation zu stärkeren Rückstelldrehmomenten führt, die dem Benutzer eine Rückstellung des Schwenkarms SA in die Senkrechtposition erleichtern.

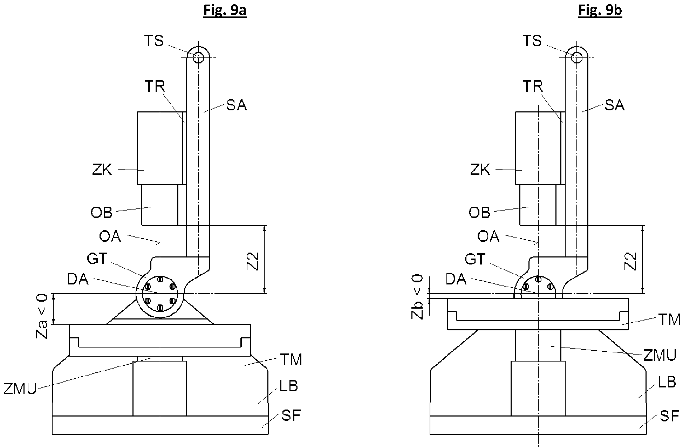

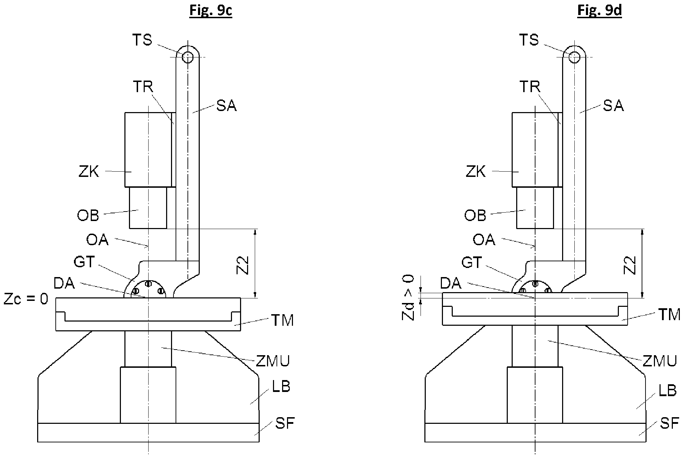

Zur Verdeutlichung der Einstellmöglichkeiten zeigen die Figuren 9a, 9b, 9c und 9d das erfindungsgemäße Schwenkstativ SST in der Vorderansicht jeweils in verschiedenen Z-Positionen Za, Zb, Zc, Zd der motorisierten unteren Z-Führung ZMU relativ zur Drehachse DA, wobei sich der Schwenkarm SA in der Senkrechteinstellung befindet und die Z-Position der motorisierten oberen Z-Führung ZMO relativ zur Drehachse DA einen Wert Z2 aufweist. Die Bezeichnungen entsprechen sonst den Bezeichnungen aus den Figuren 1a und 1b.

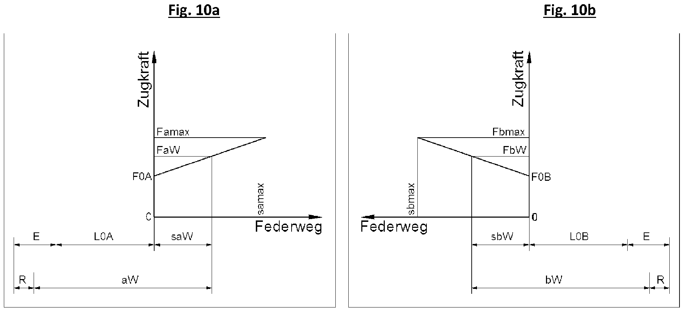

Figur 10a zeigt den Verlauf der Zugkraft der ersten Zugfeder ZFA über den Federweg gemäß der erfindungsgemäßen Anordnung in den Figuren 5a und 5b. Analog hierzu zeigt Figur 10b den Verlauf der Zugkraft der zweiten Zugfeder ZFB über den Federweg gemäß der erfindungsgemäßen Anordnung in den Figuren 5a und 5b.

Ausgehend von der im ungespannten Zustand vorliegenden Federlänge L0A ergibt sich im montierten gespannten Zustand eine bei Auslenkung des Schwenkarms SA um den aktuell wirksamen Schwenkwinkel w gegenüber der Senkrechtstellung des Schwenkarms SA Länge aW, die aus der wirksamen Länge der ersten Zugfeder ZFA zuzüglich der um die Drehachse DG drehbar gelagerten Federaufnahme FA gebildet wird. Die Bezeichnungen entsprechen sonst den Bezeichnungen aus den Figuren 5a und 5b.

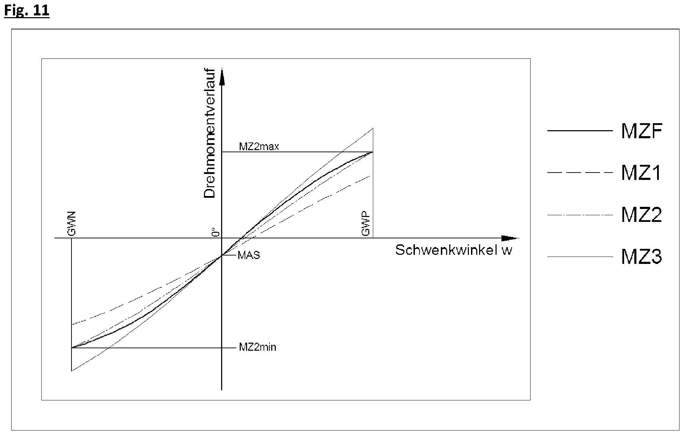

Figur 11 zeigt die gemäß der in den Figuren 5a und 5b dargestellten erfindungsgemäßen Anordnung wirksamen Drehmomentverläufe MZ1, MZ2, MZ3 für die entsprechenden Z-Positionen Z1, Z2, Z3 der motorisierten oberen Führung ZMO über den Schwenkwinkel w, die durch die jeweils im aktuell wirksamen Schwerpunkt S des mitschwenkbaren Aufbaus angreifende und senkrecht nach unten wirkende Gewichtskraft Fg verursacht werden, sowie den Drehmomentverlauf MZF über den Schwenkwinkel w, der aus den Zugkräften gemäß der Figuren 10a und 10b bei erfindungsgemäßer Anordnung der Zugfedern gemäß der Figuren 5a und 5b resultiert.

Da der Schwerpunkt des Schwenkarms SA mit den daran angeordneten mitschwenkbaren Teilen in der senkrechten Stellung des Schwenkarms SA gemäß der Figur 5a seitlich neben der Drehachse liegt, wirkt bereits in der Senkrechtstellung des Schwenkarms SA ein Drehmoment MAS, das für die Drehmomentverläufe MZ1, MZ2 und MZ3 identisch ist. Die Zugfederanordnung gemäß der Figuren 5a und 5b wird so dimensioniert, dass auch der Drehmomentverlauf MZF in der Senkrechtstellung des Schwenkarms SA den Wert MAS annimmt, da in der Senkrechtstellung eine vollständige Drehmomentkompensation vorliegen muss, denn sonst gäbe es ein Drehmoment, das die mitschwenkbaren Teile in unerwünschter Weise wieder aus der gewünschten Raststellung für die Senkrechteinstellung des Schwenkarms SA herausziehen würde.

Die Drehmomentverläufe werden beispielsweise konstruktiv auf die Grenz-Schwenkwinkel GWN und GWP begrenzt, dabei entstehen durch die Zugfedern die maximalen Drehmomente MZ2min und MZ2max. Der Drehmomentverlauf MZF wird vorzugsweise so gestaltet, dass die Drehmomentverläufe MZ1 und MZ2 für die Z-Positionen Z1 und Z2 der motorisierten oberen Z-Führung ZMO relativ zur Drehachse DA stets kleinere Drehmomente liefern, so dass durch den stärkeren Drehmomentverlauf für die Zugfedern immer ein Rückstellmoment in die Senkrechteinstellung des Schwenkarms SA vorhanden ist. Wird die Z-Positionen Z2 der motorisierten oberen Z-Führung ZMO überschritten, lässt sich die Magnetbremse nur noch bis zu dem Schwenkwinkel blockieren, bei dem gerade noch eine genügend große Rückstellkraft vorhanden ist. Eine Blockierung ist erst dann wieder möglich, wenn der zulässige Betriebsbereich nicht mehr überschritten wird. Die Rückstellkräfte führen dabei automatisch zu einer Bewegung in Richtung zulässiger Schwenkwinkelbereich. Wird die Z-Position der motorisierten oberen Z-Führung ZMO so weit nach oben gebracht, dass es gar keinen zulässigen Schwenkwinkelbereich mehr gibt, wird die Rastposition für die Senkrechteinstellung des Schwenkarms nicht verlassen, d. h. die Blockierung der Magnetbremse lässt sich nicht aufheben.

Da von der erfindungsgemäßen Anordnung aus Sicherheitsgründen auch im stromlosen Zustand keine Gefahr ausgehen darf, wird als Element eine Magnetbremse eingesetzt, die eine Schwenkbewegung im stromlosen Zustand durch den integrierten Permanentmagneten blockiert. Nur bei gedrücktem Taster wird die Erregerwicklung der Magnetbremse bestromt und neutralisiert so das Magnetfeld des Permanentmagneten, was praktisch zum Lösen der Blockierung der Schwenkbewegung führt. Zur Sicherstellung einer möglichen Einhandbedienung muss der Taster während des Festhaltens bzw. des Einstellvorgangs mit derselben Hand bedienbar sein, mit der der Schwenkarm umfasst wird. Der größte Hebel bietet eine Einstellung des Schwenkwinkels mit dem niedrigsten hierfür erforderlichen Kraftaufwand und mit der bestmöglichen Einstellgenauigkeit. Deshalb wird das obere Ende des Schwenkarms so ausgebildet, dass es sich leicht mit der rechten oder der linken Hand umfassen lässt, praktisch wird das obere Ende hierzu abgerundet. Vorzugsweise wird der Schwenkarm an der Oberseite mit einer Oberfläche versehen, die erkennbar zum Anfassen vorgesehen ist, beispielsweise durch eine farblich abgesetzte Soft Touch-Oberfläche. Da die Hand nun seitlich über dem Schwenkarm liegt, lässt sich der Daumen derselben Hand nun problemlos zum Drücken des Tasters an der Vorderseite des Schwenkarms nutzen.

Vorzugsweise wird die Drehachse DA des Schwenkarms SA aus mindestens zwei reibungsarmen Wälzlagern VK und HK bestimmt und eine hinreichend leichtgängige Rastanordnung mit einem spürbaren Rast-Einfangbereich zwischen dem Gelenkteil GT und dem ortsfesten Lagerbock LB angeordnet. Die wirkenden Rückstellkräfte, die aus der Rastanordnung mit den Anfederkräften und/oder aus der Anordnung gemäß der Figuren 5a und 5b bei geringen Reibungsverlusten für die Lagerung und Rastanordnung resultieren, führen zum schnellen und sicheren Auffinden einer spür- und reproduzierbaren Rastposition für die senkrechte Ausrichtung des Schwenkarms SA.

Der Rast-Einfangbereich ist dabei durch den Schwenkwinkelbereich gegeben, in dem die ausschließlich durch die Rastanordnung wirkenden Rückstellkräfte bzw. Rückstelldrehmomente zu einer sicheren Bewegung in die Rastposition führen.

Für das erfindungsgemäße Schwenkstativ gelten folgende Beziehungen, wobei die einzelnen Symbole in der Bezugszeichenliste näher erläutert sind: $aW = \sqrt{{\left(AX+H∗sinw\right)}^{2} + {\left(AZ+H∗cosw\right)}^{2}}$ $bW = \sqrt{{\left(BX+H∗sinw\right)}^{2} + {\left(BZ+H∗cosw\right)}^{2}}$ $saW = aW + R - E - L 0 A$ $sbW = bW + R - E - L 0 B$ $FaW = F 0 A + cA ∗ saW$ $FbW = F 0 B + cB ∗ sbW$ $MZF = H ∗ \left(FbW∗cos\left({tan}^{- 1}\left(\frac{- BZ - H ∗ cos w}{BX + H ∗ sin w}\right)-w\right)-FaW∗sin\left(90°-{tan}^{- 1}\left(\frac{- AZ - H ∗ cos w}{AX + H ∗ sin w}\right)-w\right)\right)$ $MZ 1 = Fg ∗ \left(SZ1W∗sinw+SX1W∗cosw\right)$ $MZ 2 = Fg ∗ \left(SZ2W∗sinw+SX2W∗cosw\right)$ $MZ 3 = Fg ∗ \left(SZ3W∗sinw+SX3W∗cosw\right)$

### Bezugszeichenliste

- a0: wirksame Länge der ersten Zugfeder ZFA zuzüglich der um die Drehachse DG drehbar gelagerten Federaufnahme FA in der Senkrechtstellung des Schwenkarms SA
- ABO: Achsbolzen
- AH: Abdeckhaube
- AN: Anschlagnut
- AP: Abdeckplatte für die Rastanordnung
- AS: Anschlagschraube
- aW: wirksame Länge der ersten Zugfeder ZFA zuzüglich der um die Drehachse DG drehbar gelagerten Federaufnahme FA bei Auslenkung des Schwenkarms SA um den aktuell wirksamen Schwenkwinkel w gegenüber der Senkrechtstellung des Schwenkarms SA
- AX: Position des Bolzens BOA relativ zur Drehachse DA des Schwenkarms SA in der X'-Richtung
- AZ: Position des Bolzens BOA relativ zur Drehachse DA des Schwenkarms SA in der Z-Richtung
- b0: wirksame Länge der zweiten Zugfeder ZFB zuzüglich der um die Drehachse DG drehbar gelagerten Federaufnahme FA in der Senkrechtstellung des Schwenkarms SA
- BA: Bedien- und Anzeigeeinheit
- BE: Bedieneinheit
- BOA: Bolzen zur Befestigung eines Federendes der ersten Zugfeder ZFA am Lagerbock LB
- BOB: Bolzen zur Befestigung eines Federendes der zweiten Zugfeder ZFB am Lagerbock LB
- bW: wirksame Länge der zweiten Zugfeder ZFB zuzüglich der um die Drehachse DG drehbar gelagerten Federaufnahme FA bei Auslenkung des Schwenkarms SA um den aktuell wirksamen Schwenkwinkel w gegenüber der Senkrechtstellung des Schwenkarms SA
- BX: Position des Bolzens BOB relativ zur Drehachse DA des Schwenkarms SA in der X'-Richtung
- BZ: Position des Bolzens BOB relativ zur Drehachse DA des Schwenkarms SA in der Z-Richtung
- cA: Federrate der ersten Zugfeder ZFA
- cB: Federrate der zweiten Zugfeder ZFB
- DA: Drehachse des Schwenkarms
- DF1: erste Druckfeder
- DF2: zweite Druckfeder
- DF3: dritte Druckfeder
- DG: Drehachse zur Lagerung der Federaufnahmen FA
- DK: Drehachse des Rastkugellagers
- DP: Druckplatte
- DR: Drehachse des Rasthebels
- E: wirksamer Abstand zwischen der Drehachse DG und jeweils einem Federende der ersten Zugfeder ZFA und der zweiten Zugfeder ZFB
- EB: ergonomisch geformter Bereich des Schwenkarms SA, der zum Anfassen des Schwenkarms SA während des Schwenkvorgangs vorgesehen ist
- F0A: Federvorspannung der ersten Zugfeder ZFA
- F0B: Federvorspannung der zweiten Zugfeder ZFB
- FA: Federaufnahme, die um eine Drehachse DG im Gelenkteil GT drehbar gelagert wird
- Famax: maximale Federkraft der ersten Zugfeder ZFA
- FaW: aktuelle Federkraft der ersten Zugfeder ZFA
- Fbmax: maximale Federkraft der zweiten Zugfeder ZFB
- FbW: aktuelle Federkraft der zweiten Zugfeder ZFB
- Fg: senkrecht nach unten wirkende Gesamtgewichtskraft aller mitschwenkbaren Bauteile
- G1: erster Gewindestift
- G2: zweiter Gewindestift
- G3: dritter Gewindestift
- GM: Gewindestift zur Fixierung der Magnetbremse auf dem Achsbolzen
- GO: Griffoberfläche am oberen Ende des Schwenkarms
- GT: Gelenkteil
- GWN: negativer Grenz-Schwenkwinkel
- GWP: positiver Grenz-Schwenkwinkel
- H: wirksamer Hebelarm für die Zugkräfte der ersten Zugfeder ZFA und der zweiten Zugfeder ZFB, die über die beiden Federaufnahmen FA in das Gelenkteil GT eingeleitet werden
- HD: hintere Druckscheibe
- HK: hinteres Wälzlager
- HVR: hinterer Vorschraubring
- KN: Kante, über die das gesamte Schwenkstativ SST kippen kann, wenn die Grenz-Z-Position Z2 der motorisierten oberen Z-Führung überschritten und dabei der negative Grenz-Schwenkwinkel GWN unterschritten wird
- KP: Kante, über die das gesamte Schwenkstativ SST kippen kann, wenn die Grenz-Z-Position Z2 der motorisierten oberen Z-Führung überschritten und dabei der positive Grenz-Schwenkwinkel GWP überschritten wird
- L0A: ungespannte Länge der ersten Zugfeder ZFA
- L0B: ungespannte Länge der zweiten Zugfeder ZFB
- LB: Lagerbock
- LDB: linker Daumen des Benutzers
- LHB: linke Hand des Benutzers
- MAS: Drehmoment, das durch den außermittigen Schwerpunkt S der mitgeschwenkten Bauteile in der senkrechten Anordnung entsteht
- MF: Mantelfläche des Rastsegmentes RS
- ML: am Lagerbock fixierter Teil der Magnetbremse
- MS: mitgeschwenkter Teil der Magnetbremse
- MZ: Drehmomentverlauf über den Schwenkwinkel, der durch die im aktuell wirksamen Schwerpunkt S der mitgeschwenkten Bauteile angreifende Gewichtskraft entsteht, bezogen auf die aktuell wirksame Z-Position der oberen Z-Führung relativ zur Drehachse DA des Schwenkarms SA
- MZ1: Drehmomentverlauf über den Schwenkwinkel, der durch die im aktuell wirksamen Schwerpunkt S der mitgeschwenkten Bauteile angreifende Gewichtskraft entsteht, wenn die unterste Z-Position Z1 der oberen Z-Führung relativ zur Drehachse DA des Schwenkarms SA eingestellt ist
- MZ2: Drehmomentverlauf über den Schwenkwinkel, der durch die im aktuell wirksamen Schwerpunkt S der mitgeschwenkten Bauteile angreifende Gewichtskraft entsteht, wenn die Grenz-Z-Position Z2 der oberen Z-Führung relativ zur Drehachse DA des Schwenkarms SA eingestellt ist
- MZ2max: maximales Drehmoment des Drehmomentverlaufs MZ2
- MZ2min: minimales Drehmoment des Drehmomentverlaufs MZ2
- MZ3: Drehmomentverlauf über den Schwenkwinkel, der durch die im aktuell wirksamen Schwerpunkt S der mitgeschwenkten Bauteile angreifende Gewichtskraft entsteht, wenn die oberste Z-Position Z3 der oberen Z-Führung relativ zur Drehachse DA des Schwenkarms SA eingestellt ist
- MZF: Drehmomentverlauf über den Schwenkwinkel, der aus der Krafteinleitung der Zugkräfte von der ersten Zugfeder ZFA und der zweiten Zugfeder ZFB über einen Hebel H in das Gelenkteil GT resultiert
- OA: Optische Achse
- OB: Objektiv
- OBT: Objekt
- OE: Objektebene
- OF: Oberfläche der Auflicht-Einlegeplatte, die als Objektauflage dient
- OSO: Oberseite des Objektes OBT
- OTP: obere Tischplatte
- R: wirksamer Radius an den Bolzen BOA und BOB zur Befestigung jeweils eines Federendes der ersten Zugfeder ZFA und der zweiten Zugfeder ZFB
- RDB: rechter Daumen des Benutzers
- RG: Rastgeometrie im Rastsegment RS
- RHB: rechte Hand des Benutzers
- RK: Rastkugellager
- RL: Rasthebel
- RPH: hinteres Ringspannfederpaket
- RPV: vorderes Ringspannfederpaket
- RS: Rastsegment
- S: aktuell wirksamer Schwerpunkt des kompletten oberen um die Drehachse DA schwenkbaren Stativteils incl. dem bewegten Teil aus Zoomkörper, Objektiv, Beleuchtung und Kamera
- samax: maximaler Federweg der ersten Zugfeder ZFA
- saW: aktueller Federweg der ersten Zugfeder ZFA
- SA: Schwenkarm
- sbmax: maximaler Federweg der zweiten Zugfeder ZFB
- sbW: aktueller Federweg der zweiten Zugfeder ZFB
- SES: Senkschraube
- SF: Stativfuß
- SP: Arbeitsspalt der Magnetbremse
- SST: gesamtes Schwenkstativ
- SX: Position des aktuell wirksamen Schwerpunktes S in der X'-Richtung relativ zur Drehachse DA in der Senkrechtstellung des Schwenkarms
- SX1w: Position des aktuell wirksamen Schwerpunktes S in der X'-Richtung relativ zur Drehachse DA bei um den Schwenkwinkel w geschwenktem Schwenkarm, wenn die unterste Z-Position der oberen Z-Führung relativ zur Drehachse DA des Schwenkarms eingestellt ist
- SX2w: Position des aktuell wirksamen Schwerpunktes S in der X'-Richtung relativ zur Drehachse DA bei um den Schwenkwinkel w geschwenktem Schwenkarm, wenn die Grenz-Z-Position der oberen Z-Führung relativ zur Drehachse DA des Schwenkarms eingestellt ist
- SX3w: Position des aktuell wirksamen Schwerpunktes S in der X'-Richtung relativ zur Drehachse DA bei um den Schwenkwinkel w geschwenktem Schwenkarm, wenn die oberste Z-Position der oberen Z-Führung relativ zur Drehachse DA des Schwenkarms eingestellt ist
- SXw: Position des aktuell wirksamen Schwerpunktes S in der X'-Richtung relativ zur Drehachse DA bei um den Schwenkwinkel w geschwenktem Schwenkarm
- SZ: Position des aktuell wirksamen Schwerpunktes S in der Z-Richtung relativ zur Drehachse DA in der Senkrechtstellung des Schwenkarms
- SZ1w: Position des aktuell wirksamen Schwerpunktes S in der Z-Richtung relativ zur Drehachse DA bei um den Schwenkwinkel w geschwenktem Schwenkarm, wenn die unterste Z-Position der oberen Z-Führung relativ zur Drehachse DA des Schwenkarms eingestellt ist
- SZ2w: Position des aktuell wirksamen Schwerpunktes S in der Z-Richtung relativ zur Drehachse DA bei um den Schwenkwinkel w geschwenktem Schwenkarm, wenn die Grenz-Z-Position der oberen Z-Führung relativ zur Drehachse DA des Schwenkarms eingestellt ist
- SZ3w: Position des aktuell wirksamen Schwerpunktes S in der Z-Richtung relativ zur Drehachse DA bei um den Schwenkwinkel w geschwenktem Schwenkarm, wenn die oberste Z-Position der oberen Z-Führung relativ zur Drehachse DA des Schwenkarms eingestellt ist
- SZw: Position des aktuell wirksamen Schwerpunktes S in der Z-Richtung relativ zur Drehachse DA bei um den Schwenkwinkel w geschwenktem Schwenkarm
- TM: XY-Tisch, vorzugsweise motorisiert
- TR: Träger zur Adaption des Zoomkörpers an die motorisierte obere Z-Führung
- TS: Taster zum Lösen des Schwenkarms
- VD: vordere Druckscheibe
- VK: vorderes Wälzlager
- VVR: vorderer Vorschraubring
- w: aktuell wirksamer Schwenkwinkel
- X: X-Achse des verwendeten Koordinatensystems, vom Benutzer aus gesehen positiv nach rechts weisend
- X': X'-Achse des Koordinatensystems, das nur für die Zugfederdimensionierung als Ansicht von hinten gemäß der Figuren 7a und 7b verwendet wird; vom Benutzer aus gesehen positiv nach rechts weisend, gegenüber der X-Achse kehren sich nur die Vorzeichen der Strecken um
- Y: Y-Achse des verwendeten Koordinatensystems, vom Benutzer aus gesehen positiv nach hinten weisend
- Z: Z-Achse des verwendeten Koordinatensystems, vom Benutzer aus gesehen positiv nach oben weisend
- Z1: unterste Z-Position der oberen Z-Führung relativ zur Drehachse DA des Schwenkarms
- Z2: Grenz-Z-Position der oberen Z-Führung relativ zur Drehachse DA des Schwenkarms
- Z3: oberste Z-Position der oberen Z-Führung relativ zur Drehachse DA des Schwenkarms
- Za: unterste Z-Position der unteren Z-Führung relativ zur Drehachse DA des Schwenkarms
- Zb: Z-Position der unteren Z-Führung relativ zur Drehachse DA des Schwenkarms, in der die Oberseite OSO eines auf die Oberfläche OF der Auflicht-Einlegeplatte AE aufgelegten Objektes OBT in der Drehachse DA des Schwenkarms liegt, sofern das Objekt OBT eine Höhe von Zb aufweist
- Zc: Z- Position der unteren Z-Führung relativ zur Drehachse DA des Schwenkarms, in der die Oberfläche OF der Auflicht-Einlegeplatte AE in der Drehachse DA des Schwenkarms liegt, d. h. Zc = 0
- Zd: oberste Z-Position der unteren Z-Führung relativ zur Drehachse DA des Schwenkarms
- ZFA: erste Zugfeder
- ZFB: zweite Zugfeder
- ZK: Zoomkörper mit integrierter Beleuchtung und integrierter Kamera
- ZMO: motorisierte obere Z-Führung
- ZMU: motorisierte untere Z-Führung
- Zw: aktuelle Z-Position der oberen Z-Führung relativ zur Drehachse DA des Schwenkarms

## Patentansprüche

1. Schwenkarmstativ für ein Digitalmikroskop, umfassend:
- einen Stativfuß (SF) mit einem um eine Drehachse (DA) schwenkbaren Gelenkteil (GT);
- einen an dem Gelenkteil angeordneten um die Drehachse (DA) schwenkbaren Schwenkarm (SA);
**dadurch gekennzeichnet, dass** der Stativfuß eine motorisierte untere Z-Führung zur Aufnahme eines XY-Tisches (TM) umfasst,
- am Schwenkarm eine motorisierte obere Z-Führung zur Aufnahme eines Trägers (TR) des Digitalmikroskops angeordnet ist,
wobei eine Bewegung des Schwenkarms durch eine um die Drehachse (DA) angeordnete High Torque-Permanentmagnetbremse, die aus einem mitgeschwenkten Teil (MS) und einem feststehenden Teil (ML) besteht, blockierbar ist, die Blockierung für die Dauer eines Tastendrucks eines Tasters (TS) durch das Lösen der High Torque-Permanentmagnetbremse aufhebbar ist, wobei der Taster (TS) so am Schwenkarm (SA) angeordnet ist, dass er sich mit mindestens einem Finger derselben Hand, die einen ergonomisch geformten Bereich (EB) des Schwenkarms (SA), der zum Anfassen des Schwenkarms (SA) für die Einstellung eines Schwenkwinkel (w) vorgesehen ist, umfasst, bequem drücken lässt.

2. Schwenkarmstativ nach Anspruch 1, **dadurch gekennzeichnet, dass** sich der mitgeschwenkte Teil (MS) der Magnetbremse auf einem Achsbolzen (ABO) befindet, dort über einen hinteren Vorschraubring (HVR) und ein hinteres Wälzlager (HK) mit dem Achsbolzen (ABO) fest verschraubt und in dieser Position mit einem Gewindestift (GM) auf einen Achsbolzen (ABO) fixierbar ist, wobei auf dem Achsbolzen (ABO) auch ein vorderes Wälzlager (VK) angeordnet ist, das wie auch ein hinteres Wälzlager (HK) in einem Lagerbock (LB) gelagert ist, wobei der feststehende Teil (ML) der Magnetbremse mit dem Lagerbock (LB) verschraubbar ist und eine Anlage für das hintere Wälzlager (HK) bildet, die dazu genutzt wird, um das hintere Wälzlager (HK) gegen das vordere Wälzlager (VK), das sich im Lagerbock (LB) abstützt, über einen vorderen Vorschraubring (VVR) zu verspannen, wobei zwischen dem feststehenden Teil (ML) der Magnetbremse und dem mitgeschwenkten Teil (MS) der Magnetbremse ein für den Betrieb der Magnetbremse geeigneter Arbeitsspalt (SP) vorhanden ist und der Achsbolzen (ABO) über ein vorderes Ringspannfederpaket (RPV), das über mehrere Senkschrauben (SES) und eine vordere Druckscheibe (VD) gegen das Gelenkteil (GT) verspannbar ist, sowie über ein hinteres Ringspannfederpaket (RPH), das über mehrere Senkschrauben (SES) und eine hintere Druckscheibe (HD) gegen das Gelenkteil (GT) verspannbar ist, mit dem Gelenkteil (GT) so fest verbunden ist, dass eine Schwenkbewegung um die aus der beschriebenen Lagerung resultierende Drehachse (DA) nur bei der mit Strom versorgten High Torque-Magnetbremse möglich ist, wobei eine gewaltfreie Verstellung über den Schwenkarm (SA) vorauszusetzen ist und die Schwenkbewegung durch eine Anschlagschraube (AS), die fest mit dem Gelenkteil (GT) verbunden ist und eine Anschlagnut (AN), die sich im Lagerbock (LB) befindet, begrenzbar ist.

3. Schwenkarmstativ nach Anspruch 1, **dadurch gekennzeichnet, dass** der ergonomisch geformte Bereich (EB) und der Taster (TS) am oberen Ende des Schwenkarms (SA) in einem hinreichend großen Abstand von der Drehachse (DA) entfernt angeordnet sind, so dass der Schwenkarm (SA) mit vertretbarem Kraftaufwand zur Einstellung des Schwenkwinkels (w) bewegbar ist.

4. Schwenkarmstativ nach mindestens einem der vorgenannten Ansprüche, **dadurch gekennzeichnet, dass** die Anordnung des Tasters (TS) und der ergonomisch geformte Bereichs (EB) so ausgebildet sind, dass eine links- und eine rechtshändige Bedienung gleichermaßen möglich ist.

5. Schwenkarmstativ nach mindestens einem der vorgenannten Ansprüche, **dadurch gekennzeichnet, dass** die ergonomisch gekrümmte Oberseite des Schwenkarms (SA) so geformt ist, dass sie sowohl mit der nach rechts weisenden linken Hand (LHB), als auch mit der nach links weisenden rechten Hand (RHB) bequem umfassbar ist, wobei sich der Taster (TS) dabei mit dem linken Daumen (LDB) oder dem rechten Daumen (RDB) der jeweils benutzten Hand von vorn bequem erreichbar ist.

6. Schwenkarmstativ nach Anspruch 1, **dadurch gekennzeichnet, dass** das Gelenkteil (GT) bezogen auf die Drehachse (DA) einen wirksamen Hebelarm (H) aufweist, an dem die durch eine erste Zugfeder (ZFA) und eine zweite Zugfeder (ZFB), die mit dem anderen Ende jeweils am Stativ (SST) angebracht sind, entstehenden Zugkräfte in das Gelenkteil (GT) über die Anordnung der Zugfedern (ZFA,ZFB) am Stativ (SST) so einkoppelbar sind, dass sich das vom Benutzer zur Einstellung des Schwenkwinkels (w) aufzubringende Drehmoment, das durch die vom aktuellen Schwenkwinkel (w) sowie der aktuellen Z-Position der motorisierten oberen Z-Führung (ZMO) abhängige Position des Schwerpunktes (S) und der dort angreifenden Gewichtskraft der mitgeschwenkten Teile und die durch die Lagerung entstehenden Reibmomente bestimmt wird, durch die Zugfedern (ZFA,ZFB) im gesamten Schwenkwinkelbereich unabhängig von der aktuellen Z-Position der oberen motorisierten Z-Führung (ZMO) deutlich reduzierbar ist, so dass dem Benutzer die Bedienung erleichtert wird, wobei die im Bereich der Senkrechtstellung des Schwenkarms (SA) vorhandenen Drehmomente, die durch die erste Zugfeder (ZFA) und die zweite Zugfeder (ZFB) entstehen und die Bewegung in Richtung der Senkrechteinstellung unterstützen, zu einem schnelleren und einfacheren Auffinden der Senkrechteinstellung des Schwenkarms (SA) beitragen.

7. Schwenkarmstativ für Digitalmikroskope nach Anspruch 6, **dadurch gekennzeichnet, dass** die durch eine erste Zugfeder (ZFA) und eine zweite Zugfeder (ZFB) entstehenden Zugkräfte in das Gelenkteil (GT) über die Anordnung der Zugfedern am Stativ (SST) so einkoppelbar sind, dass sich das vom Benutzer zur Einstellung des Schwenkwinkels (w) aufzubringende Drehmoment, das durch die vom aktuellen Schwenkwinkel (w) sowie der aktuellen Z-Position der motorisierten oberen Z-Führung (ZMO) abhängige Position des Schwerpunktes (S) und der dort angreifenden Gewichtskraft der mitgeschwenkten Teile und die durch die Lagerung entstehenden Reibmomente bestimmt wird, durch die Zugfedern (ZFA,ZFB) im gesamten Schwenkwinkelbereich zwischen einer untersten Z-Position Z1 der oberen motorisierten Z-Führung ZMO und mindestens bis zu einer Grenz-Z-Position (Z2), in der eine Kippgefahr über eine Kante (KN) bei unterschrittenem negativen Grenz-Schwenkwinkel (GWN) oder über die Kante (KP) bei überschrittenem positivem Grenz-Schwenkwinkel (GWP) besteht, vollständig ausgleichen oder überkompensieren lässt, wobei die Überkompensation zu stärkeren Rückstelldrehmomenten führt, die dem Benutzer eine Rückstellung des Schwenkarms (SA) in die Senkrechtposition erleichtern.

8. Schwenkarmstativ nach mindestens einem der vorgenannten Ansprüche, **dadurch gekennzeichnet, dass** die Drehachse (DA) des Schwenkarms (SA) aus mindestens zwei reibungsarmen Wälzlagern (VK) und (HK) bestimmt wird und eine hinreichend leichtgängige Rastanordnung mit einem spürbaren Rast-Einfangbereich zwischen dem Gelenkteil (GT) und dem ortsfesten Lagerbock (LB) angeordnet ist, wobei die wirkenden Rückstellkräfte, die aus der Rastanordnung mit den Anfederkräften und / oder aus der Anordnung gemäß der Ansprüche 6 oder 7 bei geringen Reibungsverlusten für die Lagerung und Rastanordnung resultieren, zum schnellen und sicheren Auffinden einer spür- und reproduzierbaren Rastposition für die senkrechte Ausrichtung des Schwenkarms (SA) führen.

9. Schwenkarmstativ nach Anspruch 8, **dadurch gekennzeichnet, dass** die Rastanordnung aus einem starren Rasthebel (RL), der um eine Drehachse (DR) im Gelenkteil (GT) drehbar gelagert ist und der ein Rastkugellager (RK) trägt, das eine Drehachse (DK) aufweist, sowie einem Rastsegment (RS) mit einer Mantelfläche (MF), auf der das Rastkugellager (RK) abrollt und einer Rastgeometrie (RG) in der Mantelfläche (MF), aufgebaut ist und der Rasthebel (RL) durch mindestens eine Zug- oder Druckfeder, beispielsweise durch drei Druckfedern (DF1), (DF2) und (DF3), gegen die Mantelfläche (MF) des Rastsegments (RS) drückbar ist, wobei die Rastgeometrie (RG) so aufgebaut ist, dass das Rastkugellager (RK) ab dem Beginn des Einfangbereichs, der bereits spürbar vor dem Erreichen der senkrechten Ausrichtung des Schwenkarms (SA) beginnt, in eine stabile Rastposition gezogen wird, die einer senkrechten Ausrichtung des Schwenkarms (SA) entspricht, wobei durch die stabile Rastposition auch eine gute Reproduzierbarkeit der senkrechten Ausrichtung des Schwenkarms (SA) gegeben ist.

10. Schwenkarmstativ nach einem der vorgenannten Ansprüche, **dadurch gekennzeichnet, dass** der ergonomisch geformte Bereich (EB) des Schwenkarms (SA) mit einer Oberfläche versehen ist, die erkennbar zum Anfassen bestimmt ist, beispielsweise durch eine farblich abgesetzte Soft Touch-Oberfläche als Griffoberfläche (GO) am oberen Ende des Schwenkarms (SA).

11. Schwenkarmstativ nach einem der vorgenannten Ansprüche, **dadurch gekennzeichnet, dass** eine aktuelle Z-Koordinate der motorisierten oberen Z-Führung (ZMO) bei gedrücktem Taster (TS) abfragbar ist und die Schwenkbewegung nur dann zugelassen wird, wenn eine zulässige Grenz-Z-Position (Z2) der motorisierten oberen Z-Führung (ZMO) sicher unterschritten ist.

12. Schwenkarmstativ nach einem der Ansprüche 7 bis 11,
**dadurch gekennzeichnet, dass** eine aktuelle Z-Koordinate der motorisierten oberen Z-Führung (ZMO) bei gedrücktem Taster (TS) abfragbar ist, eine Winkelstellung des Schwenkarms (SA) durch ein Messsystem bestimmbar ist und die Schwenkbewegung abhängig von der aktuellen Z-Koordinate der motorisierten oberen Z-Führung (ZMO) auf einen zulässigen Schwenkwinkelbereich begrenzt wird, wobei eine Blockierung der Magnetbremse im nicht zulässigen Schwenkwinkelbereich nicht zugelassen wird und im Zusammenspiel mit der Zugfederanordnung gemäß Anspruch 7 eine hinreichend große Rückstellkraft für die Rückkehr in den zulässigen Schwenkwinkelbereich vorhanden ist, so dass das Loslassen des Tasters (TS) im nicht zulässigen Schwenkwinkelbereich zu einem eingestellten Schwenkwinkel (w) im zulässigen Schwenkwinkelbereich führt.

13. Schwenkarmstativ nach Anspruch 12, **dadurch gekennzeichnet, dass** das Verlassen des zulässigen Schwenkwinkelbereichs durch ein akustisches Signal und/oder einen Warnhinweis auf einer Bedien- und Anzeigeeinheit angezeigt wird.

14. Schwenkarmstativ nach Anspruch 9, **dadurch gekennzeichnet, dass** die Mantelfläche (MF) außerhalb der Rastgeometrie so gekrümmt ist, dass das Rastkugellager (RK) stets denselben Abstand zur Drehachse (DA) aufweist, wodurch die Andruckkraft des Rastkugellagers (RK) an die Mantelfläche (MF) des Rastsegmentes (RS) unabhängig vom Schwenkwinkel (w) stets konstant bleibt.

15. Schwenkarmstativ nach Anspruch 9, **dadurch gekennzeichnet, dass** die Mantelfläche (MF) außerhalb der Rastgeometrie so gekrümmt ist, dass sich der Abstand zwischen dem Rastkugellager (RK) und der Drehachse (DA) abhängig vom Schwenkwinkel (w) ändert, wodurch die Andruckkraft des Rastkugellagers (RK) an die Mantelfläche (MF) des Rastsegmentes (RS) ebenfalls abhängig vom Schwenkwinkel (w) ist, wobei die Krümmung so wählbar ist, dass die Drehmomentverläufe aus der Zugfederanordnung gemäß Anspruch 6 so korrigiert werden, dass sich insgesamt der gewünschte Drehmomentverlauf in Abhängigkeit vom Schwenkwinkel (w) ergibt.

16. Schwenkarmstativ nach Anspruch 4, **dadurch gekennzeichnet, dass** der Schwenkarm (SA) am oberen Ende um die in der Senkrechteinstellung senkrechte Mittelachse rotationssymmetrisch ausgebildet ist, so dass dadurch der ergonomisch geformte Bereich (EB) entsteht, der sich sowohl mit der nach rechts weisenden linken Hand (LHB), als auch mit der nach links weisenden rechten Hand (RHB) bequem umfassbar ist, wobei sich der an der oberen Stirnfläche des Schwenkarms (SA) angeordnete Taster (TS) dabei mit dem linken Daumen (LDB) oder rechten Daumen (RDB) der jeweils benutzten Hand von oben bequem erreichen lässt.

## Claims

1. Pivot arm stand for a digital microscope, comprising:
- a stand base (SF) with a joint part (GT) pivotable about a rotation axis (DA);
- a pivot arm (SA) arranged on the joint part and pivotable about the rotation axis (DA);
**characterized in that** the stand base comprises a motorized lower Z-guide for receiving an XY-stage (TM),
- a motorized upper Z-guide for receiving a carrier (TR) of the digital microscope is arranged on the pivot arm,
wherein a movement of the pivot arm can be blocked by a high-torque permanent magnetic brake arranged about the rotation axis (DA) and composed of a pivoted part (MS) and of a fixed part (ML), which blocking can be cancelled for the duration of pressing of a button (TS) by the release of the high-torque permanent magnetic brake, wherein the button (TS) is arranged on the pivot arm (SA) such that it can be comfortably pressed with at least one finger of the same hand that grasps an ergonomically shaped area (EB) of the pivot arm (SA), which area (EB) of the pivot arm (SA) serves for adjusting a pivot angle (w).

2. Pivot arm stand according to Claim 1, **characterized in that** the pivoted part (MS) of the magnetic brake is situated on an axle bolt (ABO), is securely screwed there to the axle bolt (ABO) by means of a rear retainer ring (HVR) and a rear roller bearing (HK), and can be fixed in this position with a threaded pin (GM) to an axle bolt (ABO), wherein a front roller bearing (VK) is also arranged on the axle bolt (ABO) and is mounted along with a rear roller bearing (HK) in a bearing block (LB), wherein the fixed part (ML) of the magnetic brake can be screwed onto the bearing block (LB) and forms an abutment for the rear roller bearing (HK), said abutment being used to tension the rear roller bearing (HK) against the front roller bearing (VK), which is supported in the bearing block (LB), via a front retainer ring (VVR), wherein a working gap (SP) suitable for the operation of the magnetic brake is present between the fixed part (ML) of the magnetic brake and the pivoted part (MS) of the magnetic brake, and the axle bolt (ABO) is securely connected to the joint part (GT) via a front annular tension spring assembly (RPV), which can be braced against the joint part (GT) via several countersunk screws (SES) and a front pressure disc (VD), and also via a rear annular tension spring assembly (RPH), which can be braced against the joint part (GT) via several countersunk screws (SES) and a rear pressure disc (HD), in such a way that a pivoting movement about the rotation axis (DA) resulting from the described mounting is possible only when the high-torque magnetic brake is supplied with current, wherein a non-violent adjustment via the pivot arm (SA) is presupposed and the pivoting movement can be limited by a stop screw (AS), which is securely connected to the joint part (GT), and by a stop groove (AN), which is situated in the bearing block (LB).

3. Pivot arm stand according to Claim 1, **characterized in that** the ergonomically shaped area (EB) and the button (TS) at the upper end of the pivot arm (SA) are situated at a sufficient distance from the rotation axis (DA) to ensure that the pivot arm (SA) is movable with reasonable expenditure of force for setting the pivot angle (w).

4. Pivot arm stand according to at least one of the preceding claims, **characterized in that** the arrangement of the button (TS) and the ergonomically shaped area (EB) are such that left-handed operation and right-handed operation are equally possible.

5. Pivot arm stand according to at least one of the preceding claims, **characterized in that** the ergonomically curved upper side of the pivot arm (SA) is configured such that it can be comfortably grasped both with the rightward-pointing left hand (LHB) and also with the leftward-pointing right hand (RHB), wherein the button (TS) can be comfortably reached from the front with the left thumb (LDB) or the right thumb (RDB) of the respectively used hand.

6. Pivot arm stand according to Claim 1, **characterized in that** the joint part (GT) has, with respect to the rotation axis (DA), an active lever arm (H) on which the tensile forces created by a first tension spring (ZFA) and a second tension spring (ZFB), each attached with their other end to the stand (SST), can be coupled into the joint part (GT) via the arrangement of the tension springs (ZFA, ZFB) on the stand (SST) in such a way that the torque to be applied by the user for setting the pivot angle (w), and determined by the dependent position of the centre of gravity (S) as a function of the instantaneous pivot angle (w) and the instantaneous Z-position of the motorized upper Z-guide (ZMO) and by the weight force acting there of the.pivoted parts and the frictional moments created by the mounting, can be noticeably reduced by the tension springs (ZFA, ZFB) across the entire pivot angle range independently of the instantaneous Z-position of the upper motorized Z-guide (ZMO), thereby making operation easier for the user, and wherein the torques present in the area of the vertical setting of the pivot arm (SA), which are created by the first tension spring (ZFA) and the second tension spring (ZFB) and support the movement in the direction of the vertical setting, contribute to faster and easier locating of the vertical setting of the pivot arm (SA).

7. Pivot arm stand for digital microscopes according to Claim 6, **characterized in that** the tensile forces created by a first tension spring (ZFA) and a second tension spring (ZFB) can be coupled into the joint part (GT) via the arrangement of the tension springs on the stand (SST) in such a way that the torque to be applied by the user for setting the pivot angle (w), and determined by the dependent position of the centre of gravity (S) as a function of the instantaneous pivot angle (w) and of the instantaneous Z-position of the motorized upper Z-guide (ZMO) and by the weight force of the pivoted parts acting there, and by the frictional moments created by the mounting, can be fully compensated or overcompensated by the tension springs (ZFA, ZFB) across the entire pivot angle range between a lowermost Z-position (Z1) of the upper motorized Z-guide (ZMO) and at least up to a limit Z-position (Z2), in which there is a danger of tilting over an edge (KN) when falling short of a negative limit pivot angle (GWN) or over the edge (KP) when exceeding a positive limit pivot angle (GWP), wherein the overcompensation results in stronger restoring torques, which make it easier for the user to return the pivot arm (SA) to the vertical position.

8. Pivot arm stand according to at least one of the preceding claims, **characterized in that** the rotation axis (DA) of the pivot arm (SA) is determined from at least two low-friction roller bearings (VK) and (HK), and a sufficiently smooth locking arrangement with a discernible lock-capturing range is arranged between the joint part (GT) and the stationary bearing block (LB), wherein the active restoring forces which result with minimal frictional losses from the locking arrangement with the spring-loading forces and/or from the arrangement according to Claim 6 or 7 for the mounting and locking arrangement, lead to fast and simple locating of a discernible and reproducible locking position for the vertical orientation of the pivot arm (SA).

9. Pivot arm stand according to Claim 8, **characterized in that** the locking arrangement is constructed from a stationary locking lever (RL), which is mounted rotatably about a rotation axis (DR) in the joint part (GT) and supports a locking ball bearing (RK) having a rotation axis (DK), and from a locking segment (RS) having a jacket surface (MF) on which the locking ball bearing (RK) rolls, and a locking geometry (RG) in the jacket surface (MF), and the locking lever (RL) can be pressed against the jacket surface (MF) of the locking segment (RS) by at least one tension spring or compression spring, for example by three compression springs (DF1), (DF2) and (DF3), wherein the locking geometry (RG) is configured such that the locking ball bearing (RK) is drawn
into a stable locking position, corresponding to a vertical orientation of the pivot arm (SA), right from the start of the capture range, which begins already discernibly before the vertical orientation of the pivot arm (SA) is reached, wherein the stable locking position also permits good reproducibility of the vertical orientation of the pivot arm (SA).

10. Pivot arm stand according to one of the preceding claims, **characterized in that** the ergonomically shaped area (EB) of the pivot arm (SA) is provided with a surface that is clearly intended to be gripped, for example a soft-touch surface of colour contrasts serving as a grip surface (GO) at the upper end of the pivot arm (SA).

11. Pivot arm stand according to one of the preceding claims, **characterized in that** an instantaneous Z-coordinate of the motorized upper Z-guide (ZMO) can be retrieved when the button (TS) is pressed, and the pivoting movement is permitted only when an admissible limit Z-position (Z2) of the motorized upper Z-guide (ZMO) is not exceeded.

12. Pivot arm stand according to one of Claims 7 to 11, **characterized in that** an instantaneous Z-coordinate of the motorized upper Z-guide (ZMO) can be retrieved when the button (TS) is pressed, an angular setting of the pivot arm (SA) can be determined by a measuring system, and the pivoting movement is limited to an admissible pivot angle range as a function of the instantaneous Z-coordinate of the motorized upper Z-guide (ZMO), wherein a blocking of the magnetic brake is not permitted in the inadmissible pivot angle range and, in combination with the tension spring arrangement according to Claim 7, a sufficiently strong restoring force is present for the return to the admissible pivot angle range, such that releasing the button (TS) in the inadmissible pivot angle range results in a pivot angle (w) that is set in the admissible pivot angle range.

13. Pivot arm stand according to Claim 12, **characterized in that** a departure from the admissible pivot angle range is indicated by an acoustic signal and/or a warning on a control and display unit.

14. Pivot arm stand according to Claim 9, **characterized in that** the jacket surface (MF) outside the locking geometry is curved in such a way that the locking ball bearing (RK) is always at the same distance from the rotation axis (DA), as a result of which the contact force of the locking ball bearing (RK) against the jacket surface (MF) of the locking segment (RS) always remains constant regardless of the pivot angle (w).

15. Pivot arm stand according to Claim 9, **characterized in that** the jacket surface (MF) outside the locking geometry is curved in such a way that the distance between the locking ball bearing (RK) and the rotation axis (DA) changes depending on the pivot angle (w), as a result of which the contact force of the locking ball bearing (RK) against the jacket surface (MF) of the locking segment (RS) is likewise dependent on the pivot angle (w), wherein the curvature can be chosen such that the torque profiles from the tension spring arrangement according to Claim 6 are corrected, resulting overall in the desired torque profile as a function of the pivot angle (w).

16. Pivot arm stand according to Claim 4, **characterized in that** the upper end of the pivot arm (SA) is rotationally symmetrical about the vertical centre axis in the vertical setting, thereby creating the ergonomically shaped area (EB) that can be grasped comfortably both with the rightward-pointing left hand (LHB) and also with the leftward-pointing right hand (RHB), wherein the button (TS) arranged on the upper end face of the pivot arm (SA) can be comfortably reached from above with the left thumb (LDB) or right thumb (RDB) of the respectively used hand.

## Revendications

1. Support de bras pivotant pour un microscope numérique, comprenant :
- un pied de support (SF) avec une partie d'articulation (GT) pouvant pivoter autour d'un axe de rotation (DA) ;
- un bras pivotant (SA) disposé sur la partie d'articulation et pouvant pivoter autour de l'axe de rotation (DA) ;
**caractérisé en ce que** le pied de support comprend un guide en Z inférieur motorisé pour recevoir une table XY (TM),
- un guide en Z supérieur motorisé est disposé sur le bras pivotant pour recevoir un support (TR) du microscope numérique,
un déplacement du bras pivotant pouvant être bloqué par un frein à aimant permanent à couple élevé disposé autour de l'axe de rotation (DA), lequel se compose d'une partie entraînée en pivotement (MS) et d'une partie fixe (ML), le blocage pouvant être supprimé pendant la durée de l'enfoncement d'une touche (TS) par libération du frein à aimant permanent à couple élevé, la touche (TS) étant disposée sur le bras pivotant (SA) de telle sorte qu'elle puisse être pressée de manière confortable avec au moins un doigt de la même main qui saisit une région de forme ergonomique (EB) du bras pivotant (SA) qui est prévue pour saisir le bras pivotant (SA) pour l'ajustement d'un angle de pivotement (w).

2. Support de bras pivotant selon la revendication 1, **caractérisé en ce que** la partie entraînée en pivotement (MS) du frein magnétique se trouve sur un boulon d'axe (ABO), y est vissée fixement au boulon d'axe (ABO) par le biais d'une bague de prévissage (HVR) et d'un palier à roulement arrière (HK) et qui peut être fixée dans cette position avec une broche filetée (GM) sur un boulon d'axe (ABO), un palier à roulement avant (VK) étant également disposé sur le boulon d'axe (ABO), et étant supporté, tout comme un palier à roulement arrière (HK), dans un support de palier (LB), la partie fixe (ML) du frein magnétique pouvant être vissée au support de palier (LB) et formant un appui pour le palier à roulement arrière (HK) qui est utilisé pour serrer, par le biais d'une bague de prévissage avant (VVR), le palier à roulement arrière (HK) contre le palier à roulement avant (VK) qui s'appuie dans le support de palier (LB), une fente de travail (SP) appropriée pour le fonctionnement du frein magnétique étant prévue entre la partie fixe (ML) du frein magnétique et la partie entraînée en pivotement (MS) du frein magnétique, et le boulon d'axe (ABO) étant connecté fixement à la partie d'articulation (GT) par le biais d'un paquet de ressorts de serrage annulaire avant (RPV), qui peut être serré par le biais de plusieurs vis à tête fraisée (SES) et d'une rondelle de compression avant (VD) contre la partie d'articulation (GT) et par le biais d'un paquet de ressorts de serrage annulaire arrière (RPH), qui peut être serré par le biais de plusieurs vis à tête fraisée (SES) et d'une rondelle de compression arrière (HD) contre la partie d'articulation (GT), de telle sorte qu'un mouvement de pivotement autour de l'axe de rotation (DA) résultant du support sur palier décrit soit seulement possible lorsque le frein magnétique à couple élevé est alimenté en courant, un déplacement sans violence par le biais du bras pivotant (SA) devant être supposé et le mouvement de pivotement pouvant être limité par une vis de butée (AS) qui est connectée fixement à la partie d'articulation (GT) et par une rainure de butée (AN) qui se trouve dans le support de palier (LB).

3. Support de bras pivotant selon la revendication 1, **caractérisé en ce que** la région de forme ergonomique (EB) et la touche (TS) à l'extrémité supérieure du bras pivotant (SA) sont disposées à une distance suffisamment grande de l'axe de rotation (DA) de telle sorte que le bras pivotant (SA) puisse être déplacé avec un effort raisonnable pour l'ajustement de l'angle de pivotement (w).

4. Support de bras pivotant selon au moins l'une quelconque des revendications précédentes, **caractérisé en ce que** l'agencement de la touche (TS) et de la région de forme ergonomique (EB) sont réalisés de telle sorte que l'on puisse effectuer de la même manière une commande à main gauche et une commande à main droite.

5. Support de bras pivotant selon au moins l'une quelconque des revendications précédentes, **caractérisé en ce que** le côté supérieur de courbure ergonomique du bras pivotant (SA) est formé de telle sorte qu'il puisse être saisie de manière confortable à la fois par une main gauche (LHB) tournée vers la droite et par une main droite (RHB) tournée vers la gauche, la touche (TS) pouvant dans ce cas être atteinte de manière confortable depuis l'avant par le pouce gauche (LDB) ou par le pouce droit (RDB) de la main respectivement utilisée.

6. Support de bras pivotant selon la revendication 1, **caractérisé en ce que** la partie d'articulation (GT) présente, par rapport à l'axe de rotation (DA), un bras de levier actif (H) au niveau duquel les forces de traction produites par un premier ressort de traction (ZFA) et un deuxième ressort de traction (ZFB), qui sont respectivement montés par l'autre extrémité sur le support (SST), peuvent être introduites dans la partie d'articulation (GT) par le biais de l'agencement des ressorts de traction (ZFA, ZFB) sur le support (SST), de telle sorte que le couple devant être appliqué par l'utilisateur pour ajuster l'angle de pivotement (w), qui est déterminé par la position, dépendant de l'angle de pivotement actuel (w) ainsi que de la position Z actuelle du guide en Z supérieur motorisé (ZMO), du centre de gravité (S) et de la force de pesanteur agissant sur celui-ci, des pièces entraînées en pivotement, et par les couples de friction dus au support sur palier, puisse être nettement réduit par les ressorts de traction (ZFA, ZFB) dans la plage angulaire de pivotement totale indépendamment de la position Z actuelle du guide en Z supérieur motorisé (ZMO), de sorte que la commande soit plus facile pour l'utilisateur, les couples présents dans la région de la position verticale du bras pivotant (SA), qui sont produits par le premier ressort de traction (ZFA) et le deuxième ressort de traction (ZFB) et qui supportent le déplacement dans la direction de l'ajustement vertical, contribuant à un établissement plus rapide et plus simple de l'ajustement vertical du bras pivotant (SA).

7. Support de bras pivotant pour un microscope numérique selon la revendication 6, **caractérisé en ce que** les forces de traction produites par un premier ressort de traction (ZFA) et par un deuxième ressort de traction (ZFB) peuvent être introduites dans la partie d'articulation (GT) par le biais de l'agencement des ressorts de traction sur le support (SST) de telle sorte que le couple devant être appliqué par l'utilisateur pour ajuster l'angle de pivotement (w), qui est déterminé par la position, dépendant de l'angle de pivotement actuel (w) ainsi que de la position Z actuelle du guide en Z supérieur motorisé (ZMO), du centre de gravité (S) et de la force de pesanteur agissant sur celui-ci, des pièces entraînées en pivotement, et par les couples de friction dus au support sur palier, puisse être complètement équilibré ou surcompensé par les ressorts de traction (ZFA, ZFB) dans la plage angulaire de pivotement totale entre une position Z la plus inférieure Z1 du guide en Z supérieur motorisé (ZMO) et au moins jusqu'à une position Z limite (Z2), dans laquelle il existe un risque de basculement au-delà d'une arête (KN) lorsque l'on passe en dessous d'un angle de pivotement limite négatif (GWN) ou au-delà de l'arête (KP) lorsque l'on dépasse un angle de pivotement limite positif (GWP), la surcompensation conduisant à des couples de rappel plus importants qui facilitent pour l'utilisateur un rappel du bras pivotant (SA) dans la position verticale.

8. Support de bras pivotant selon au moins l'une quelconque des revendications précédentes, **caractérisé en ce que** l'axe de rotation (DA) du bras pivotant (SA) est déterminé à partir d'au moins deux paliers à roulement à faible friction (VK) et (HK), et un agencement d'encliquetage suffisamment souple avec une région de début d'encliquetage détectable est disposé entre la partie d'articulation (GT) et le support sur palier fixe (LB), les forces de rappel s'exerçant, lesquelles résultent de l'agencement d'encliquetage avec les forces de ressort et/ou de l'agencement selon les revendications 6 ou 7 en cas de faibles pertes de friction pour le support sur palier et l'agencement d'encliquetage, conduisant à un ajustement plus rapide et plus sûr d'une position d'encliquetage détectable et reproductible pour l'orientation verticale du bras pivotant (SA).

9. Support de bras pivotant selon la revendication 8, **caractérisé en ce que** l'agencement d'encliquetage est constitué d'un levier d'encliquetage rigide (RL), qui est supporté à rotation autour d'un axe de rotation (DR) dans la partie d'articulation (GT) et qui porte un roulement à billes d'encliquetage (RK) qui présente un axe de rotation (DK), et d'un segment d'encliquetage (RS) avec une surface d'enveloppe (MF) sur laquelle le roulement à billes d'encliquetage (RK) roule et d'une géométrie d'encliquetage (RG) dans la surface d'enveloppe (MF), et le levier d'encliquetage (RL) peut être pressé par au moins un ressort de traction ou de compression, par exemple par trois ressorts de compression (DF1), (DF2) et (DF3), contre la surface d'enveloppe (MF) du segment d'encliquetage (RS), la géométrie d'encliquetage (RG) étant réalisée de telle sorte que le roulement à billes d'encliquetage (RK) soit tiré, à partir du début de la région de début qui commence déjà de manière détectable avant d'atteindre l'orientation verticale du bras pivotant (SA), dans une position d'encliquetage stable qui correspond à une orientation verticale du bras pivotant (SA), une bonne reproductibilité de l'orientation verticale du bras pivotant (SA) pouvant également être assurée par la position d'encliquetage stable.

10. Support de bras pivotant selon l'une quelconque des revendications précédentes, **caractérisé en ce que** la région de forme ergonomique (EB) du bras pivotant (SA) est pourvue d'une surface qui est prévue pour être touchée de manière reconnaissable, par exemple par une surface tactile douce se distinguant par sa couleur, en tant que surface de préhension (GO) à l'extrémité supérieure du bras pivotant (SA).

11. Support de bras pivotant selon l'une quelconque des revendications précédentes, **caractérisé en ce qu'**une coordonnée Z actuelle du guide Z supérieur motorisé (ZMO) peut être demandée lorsque la touche (TS) est enfoncée et le mouvement de pivotement n'est alors autorisé que lorsque l'on passe de manière sûre en dessous d'une position Z limite admissible (Z2) du guide Z supérieur motorisé (ZMO).

12. Support de bras pivotant selon l'une quelconque des revendications 7 à 11, **caractérisé en ce qu'**une coordonnée Z actuelle du guide Z supérieur motorisé (ZMO) peut être demandée lorsque la touche (TS) est enfoncée, une position angulaire du bras pivotant (SA) peut être déterminée par un système de mesure et le mouvement de pivotement est limité, indépendamment de la coordonnée Z actuelle du guide Z supérieur motorisé (ZMO), à une plage angulaire de pivotement admissible, un blocage du frein magnétique dans la région angulaire de pivotement non autorisé n'étant pas autorisé et, en collaboration avec l'agencement de ressort de traction selon la revendication 7, une force de rappel suffisamment grande pour le retour dans la plage angulaire de pivotement admissible étant présente de telle sorte que le relâchement de la touche (TS) dans la plage angulaire de pivotement non admissible conduise à un angle de pivotement ajusté (w) dans la plage angulaire de pivotement admissible.

13. Support de bras pivotant selon la revendication 12, **caractérisé en ce que** la sortie de la plage de d'angle de pivotement admissible est indiquée par un signal acoustique et/ou un avertissement sur une unité de commande et d'affichage.

14. Support de bras pivotant selon la revendication 9, **caractérisé en ce que** la surface d'enveloppe (MF) est courbée à l'extérieur de la géométrie d'encliquetage de telle sorte que le roulement à billes d'encliquetage (RK) présente toujours la même distance à l'axe de rotation (DA) de sorte que la force de pressage du roulement à billes d'encliquetage (RK) contre la surface d'enveloppe (MF) du segment d'encliquetage (RS) reste toujours constante indépendamment de l'angle de pivotement (w).

15. Support de bras pivotant selon la revendication 9, **caractérisé en ce que** la surface d'enveloppe (MF) est courbée à l'extérieur de la géométrie d'encliquetage, de telle sorte que la distance entre le roulement à billes d'encliquetage (RK) et l'axe de rotation (DA) varie en fonction de l'angle de pivotement (w) de sorte que la force de pressage du roulement à billes d'encliquetage (RK) contre la surface d'enveloppe (MF) du segment d'encliquetage (RS) varie également en fonction de l'angle de pivotement (w), la courbure pouvant être sélectionnée de telle sorte que l'allure du couple provenant de l'agencement de ressorts de traction selon la revendication 6 puisse être corrigée de telle sorte que dans l'ensemble l'allure du couple souhaitée soit obtenue en fonction de l'angle de pivotement (w).

16. Support de bras pivotant selon la revendication 4, **caractérisé en ce que** le bras pivotant (SA) est réalisé avec une symétrie de révolution à l'extrémité supérieure autour de l'axe médian vertical dans l'ajustement vertical de telle sorte que l'on obtienne ainsi la région de forme ergonomique (EB) qui peut être saisie de manière confortable à la fois avec la main gauche tournée vers la droite (LHB), ainsi qu'avec la main droite tournée vers la gauche (RHB), la touche (TS) disposée au niveau de la surface frontale supérieure du bras pivotant (SA) pouvant ainsi être atteinte de manière confortable par le haut avec le pouce gauche (LDB) ou le pouce droit (RDB) de la main respectivement utilisée.
